# EUROPÄISCHE PATENTSCHRIFT

(11) **EP 3 882 796 B1**
(45) Veröffentlichungstag und Bekanntmachung des Hinweises auf die Patenterteilung: **27.08.2025**
(21) Anmeldenummer: 21163652.7
(22) Anmeldetag: 19.03.2021
(51) Int. Cl.: G06F 21/32, G06F 21/33, G06F 21/44, G06F 21/74

(54) **NUTZERAUTHENTIFIZIERUNG UNTER VERWENDUNG ZWEIER UNABHÄNGIGER SICHERHEITSELEMENTE**
USER AUTHENTICATION USING TWO INDEPENDENT SECURITY ELEMENTS
AUTHENTIFICATION DE L'UTILISATEUR À L'AIDE DE DEUX ÉLÉMENTS DE SÉCURITÉ INDÉPENDANTS

(30) Priorität: 20.03.2020 DE 102020107805
(43) Veröffentlichungstag der Anmeldung: 22.09.2021
(73) Patentinhaber: Bundesdruckerei GmbH, 10969 Berlin (DE)
(72) Erfinder: DIETRICH, Frank, 12437 Berlin (DE); SCHWAN, Dr. Matthias, 13086 Berlin (DE)
(74) Vertreter: Richardt Patentanwälte PartG mbB

(56) Entgegenhaltungen:
- WO-A1-2019/191215
- US-A1- 2016 224 984
- US-A1- 2018 191 501
- US-A1- 2018 322 298
- US-A1- 2019 332 813

## Beschreibung

Die Erfindung betrifft ein Verfahren zum Authentifizieren eines Nutzers gegenüber einem auf einem mobilen Endgerät installierten Anwendungsprogramm sowie ein mobiles Endgerät und ein System zum Ausführen des Verfahrens.

Mobile Endgeräte, wie beispielsweise Smartphones, sind allgegenwärtig. Sie werden in vielen Lebensbereichen und Situationen zur Erfüllung verschiedenster Aufgaben im digitalen Bereich bzw. unter Zuhilfenahme digitaler Hilfsmittel verwendet. Dabei finden ein und dieselben mobile Endgeräte Verwendung sowohl in Bereichen mit niedrigen Sicherheitsanforderungen als auch in Bereichen mit hohen Sicherheitsanforderungen.

Mithin müssen entsprechende mobile Endgeräte in der Lage sein auch solch hohen Sicherheitsanforderungen zu erfüllen. Die Sicherheit mobiler Endgeräte, wie Smartphones, ist daher zu einer relevanten Anforderung geworden für die Hersteller der Geräte, für die Hersteller der auf den Geräten installierten Programmen sowie Anbieter von Dienstleistungen, welche unter Verwendung der Geräte genutzt werden können. Um die Sicherheit der Nutzung sicherstellen zu können, ist eine sichere Authentifizierung des tatsächlichen Nutzers des Endgeräts von zentraler Bedeutung. Aus Sicht von Herstellern von Programmen sowie Anbieter von Dienstleistungen gestaltet sich dabei insbesondere eine Implementierung eines einheitlich hohen Sicherheitsstandards für Geräte unterschiedlicher Hersteller schwierig.

Die US 2018/322298 A1 beschreibt ein Bereitstellen von Single-Sign-On-Funktionen in mobilen Anwendungen in einer sicheren Umgebung unter Verwendung eines gemeinsam genutzten Tresors. Eine Anwendung fordert einen Benutzer auf, eine Benutzerentropie wie einen Passcode bereitzustellen. Die Anwendung verwendet die Benutzerentropie, um einen mit Benutzerentropie verschlüsselten Tresorschlüssel zu entschlüsseln. Sobald der Tresorschlüssel entschlüsselt ist, entschlüsselt die Anwendung eine Tresordatenbank des gemeinsam genutzten Tresors. Der gemeinsam genutzte Tresor speichert gemeinsame Geheimnisse wie Server-Anmeldeinformationen und einen Entsperrschlüssel. Die Anwendung speichert den Entsperrschlüssel, erzeugt einen mit dem Entsperrschlüssel verschlüsselten Tresorschlüssel und veranlasst den gemeinsam genutzten Tresor, den mit dem Entsperrschlüssel verschlüsselten Tresorschlüssel zu speichern, wodurch der Tresor entsperrt wird. Die Anwendung verwendet dann den Entsperrschlüssel, um die Tresordatenbank zu entschlüsseln, ohne den Benutzer aufzufordern, die Benutzerentropie erneut anzugeben.

Die US 2018/191501 A1 beschreibt ein Verfahren zum gemeinsamen Nutzen von Authentifizierungsdaten. Das Verfahren umfasst: Generieren und Speichern eines persistenten Gruppenidentifikationscodes für eine Gruppe von Authentifikatoren, die einen gemeinsamen Satz von Authentifizierungsschlüsseln teilen, eine anfängliche Gruppen-ID, die bei einer ersten Verwendung eines ersten Authentifikators und/oder nach einem Werksreset des ersten Authentifikators hin zu erzeugen ist und einen individuellen asymmetrischen Wrapping-Key-Verschlüsselungsschlüssel (WKEK) bei einer ersten Verwendung des ersten Authentifikators und/oder nach jedem Werksreset des ersten Authentifikators erzeugt und speichert; Erzeugen und Speichern eines symmetrischen Umhüllungsschlüssels (WK), wobei der Umhüllungsschlüssel bei einer ersten Verwendung des ersten Authentifikators und/oder nach jedem Werksreset des ersten Authentifikators zu generieren ist; Erzeugen eines Beitrittsblocks unter Verwendung eines Authentifikator-Identifikationscodes für den ersten Authentifikator und den WKEK, wobei der Beitrittsblock verwendbar ist, um einer bestehenden Authentifikator-Gruppe beizutreten, wobei der Beitrittsblock an einen zweiten Authentifikator zu senden ist; Verifizieren des Beitrittsblocks am zweiten Authentifikator und Erzeugen eines Beitrittsantwortblocks als Reaktion auf eine Benutzergenehmigung, wobei der Beitrittsantwortblock durch Verschlüsseln des WK und der Gruppen-ID unter Verwendung des WKEK erzeugt wird und an den ersten Authentifikator zu übertragen ist; sowie Entschlüsseln des Beitrittsantwortblocks und Speichern des WK und der Gruppen-ID.

Die WO 2019/191215 A1 beschreibt ein System zur Authentifizierung unter Verwendung eines Berechtigungsnachweises mit einer Schnittstelle und einem Prozessor. Die Schnittstelle ist so konfiguriert, dass sie von einer Anwendung eine Zugriffsberechtigungsanforderung empfängt, wobei der Zugriff auf die Anwendung von einem Benutzer unter Verwendung eines Benutzergeräts angefordert wird. Der Prozessor ist so konfiguriert, dass er dem Benutzer eine Anmeldeanforderung bereitstellt, eine Login-Antwort validiert, ein Benutzerauthentifizierungsgerät basierend auf der Login-Antwort bestimmt, eine Nachweisanforderung an das Benutzerauthentifizierungsgerät stellt, eine Beweisantwort empfängt, unter Verwendung eines Distributed Ledgers feststellen, dass die Nachweisantwort gültig ist, einen Token generiert und den Token der Anwendung bereitstellt, die den Zugriff für den Benutzer autorisiert.

Die US 2016/224984 A1 beschreibt ein Verfahren, welches ein Speichern eines biometrischen Merkmals eines Nutzers in einem Datenkommunikationsgerät des Nutzers, ein Vergleichen eines in das Gerät eingegebenen biometrischen Merkmals mit dem in dem Gerät gespeicherten biometrischen Merkmal, ein Erzeugen eines Zertifikats, das den Nutzer innerhalb des Geräts authentifiziert, falls das in das Gerät eingegebene biometrische Merkmal mit dem in dem Gerät gespeicherten biometrischen Merkmal übereinstimmt, und ein Erleichtern einer Finanztransaktion des Nutzers unter Verwendung des Zertifikats umfasst.

Die US 2019/332813 A1 beschreibt ein System zur Steuerung einer Nutzbarkeit eines elektronischen Geräts mit einer Verarbeitungseinheit. Das System umfasst ein erstes Steuermodul, das mit der Verarbeitungseinheit verbunden ist. Das erste Steuermodul umfasst ein Modem zur Kommunikation mit einem Mobilfunknetz und eine an das Modem angeschlossene Zugangsschaltung für einen Mobilfunknetzzugang. Die Zugangsschaltung umfasst ein erstes Sicherheitselement. Das System umfasst ein zweites Steuermodul, das ein zweites Sicherheitselement umfasst und dazu konfiguriert ist, über eine Kommunikationsverbindung mit dem ersten Sicherheitselement zu kommunizieren. Die Zugangsschaltung ist so konfiguriert, dass sie eine Zustandsmaschine realisiert, die so konfiguriert ist, dass sie einen Benutzerfreundlichkeitsstatus in Abhängigkeit von der Kommunikation zwischen dem ersten Sicherheitselement und dem zweiten Sicherheitselement festsetzt und das Gerät gemäß dem Benutzerfreundlichkeitsstatus steuert.

Der Erfindung liegt die Aufgabe zugrunde, ein Verfahren zum Authentifizieren eines Nutzers gegenüber einem auf einem mobilen Endgerät installierten Anwendungsprogramm zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Authentifizieren eines Nutzers gegenüber einem auf einem mobilen Endgerät installierten Anwendungsprogramm. Auf dem Endgerät ist ein Betriebssystem installiert. Das Betriebssystem ist dazu konfiguriert zumindest einen Authentifizierungssensor des Endgeräts zum Erfassen zumindest eines Authentifizierungsfaktors des Nutzers zu steuern. Das Endgerät umfasst ein dem Betriebssystem zugeordnetes erstes Sicherheitselement. Das erste Sicherheitselement umfasst kryptographische Mittel zum Ausführen eines Challenge-Response-Verfahrens.

Das Endgerät umfasst ferner ein von dem ersten Sicherheitselement unabhängiges zweites Sicherheitselement mit einem dem Anwendungsprogramm zugeordneten Sicherheitsapplet. Das Sicherheitsapplet umfasst kryptographische Mittel zum Ausführen eines Challenge-Response-Verfahrens.

Das Verfahren umfasst:
- auf eine Authentifizierungsanfrage des Anwendungsprogramms hin, Authentifizieren des Nutzers durch das Betriebssystem unter Verwendung des Authentifizierungssensors und des ersten Sicherheitselements,
- Ausführen eines Challenge-Response-Verfahrens zwischen dem ersten Sicherheitselement und dem Sicherheitsapplet des zweiten Sicherheitselements, wobei ein erfolgreiches Ausführen des Challenge-Response-Verfahrens eine erfolgreiche Authentifizierung des Nutzers durch das Betriebssystem bestätigt,
- auf ein erfolgreiches Ausführen des Challenge-Response-Verfahrens hin, Bestätigen der erfolgreichen Authentifizierung des Nutzers gegenüber dem Anwendungsprogramm durch das Sicherheitsapplet.

Das mobile Endgerät kann beispielsweise als Authentisierungstoken, Autorisierungstoken und/oder als Identitätsnachweis, d.h. ID-Token, dienen, etwa in elektronischen Geschäftsprozessen. Zu diesem Zweck kann der Nutzer durch das mobile Endgerät sicher authentifiziert werden. Nach Ausführungsformen kann die lokale Authentifizierung des Nutzers durch das Endgerät als Grundlage für eine weitere Authentifizierung des Nutzers unter Verwendung von, beispielsweise auf dem Endgerät gespeicherten, Identitätsattributen für eine weiteren Authentifizierung durch einen ID-Provider-Dienst dienen.

Das mobile Endgerät ist für eine sichere Nutzerauthentifizierung unter Verwendung des Authentifizierungssensors und des Betriebssystems bzw. des ersten Sicherheitselements konfiguriert. Die Authentifizierung kann beispielsweise auf einem Erfassen und Auswerten biometrischer Merkmale des Nutzers beruhen.

Ausführungsformen können den Vorteil haben, dass Hersteller von Anwendungsprogrammen bzw. die entsprechenden Anwendungsprogramme die Authentifizierungsfunktionalität des mobilen Endgeräts zur Nutzerauthentifizierung zurückgreifen können. Die Authentifizierungsfunktionalität des Endgeräts unter Verwendung des Authentifizierungssensors und des ersten Sicherheitselements implementieren eine sichere Bindung des Nutzers mit dem Endgerät. Es fehlt aber an einer sicheren Bindung des Endgeräts an das entsprechende Anwendungsprogramm. Eine solche sichere Bindung kann durch Verwendung des zweiten Sicherheitselements mit einem Applet des Anwendungsprogramms implementiert werden. Dabei stellt das erste Sicherheitselement, bei welchem es sich beispielsweise um ein hardwarebasiertes Sicherheitselement des Geräteherstellers handelt, kryptographische Mittel, wie etwa kryptographisches Schlüsselmaterial und Protokolle, zur Verfügung, welche für eine sichere Zurverfügungstellung der Authentifizierungsergebnisse des Endgeräts für ein auf dem Endgerät installiertes Anwendungsprogramm genutzt werden können. Mithin stellt das erste Sicherheitselement die kryptographische Sicherheit des Betriebssystems sicher bzw. stellt dem Betriebssystem kryptographische Sicherungsfunktionalität zur Verfügung. Nach Ausführungsformen kann es sich bei dem ersten Sicherheitselement beispielsweise auch um ein softwarebasiertes und/oder firmwarebasiertes Sicherheitselement des Geräteherstellers handeln. Das zweite Sicherheitselement, welches unter Verwendung des Challenge-Response-Protokolls sicher mit dem ersten Sicherheitselement kommuniziert und das Applet des Anwendungsprogramms umfasst, kann eine sichere Verbindung mit dem ersten Sicherheitselement gewährleisten. Das zweite Sicherheitselement stellt kryptographische Mittel, wie etwa kryptographisches Schlüsselmaterial und Protokolle, zur Verfügung, welche dem Anwendungsprogramm zugeordnet sind und unter dessen Verfügungshoheit und/oder der Verfügungshoheit des Herstellers des Anwendungsprogramms stehen. Mithin stellt das zweite Sicherheitselement die kryptographische Sicherheit des Anwendungsprogramms sicher bzw. stellt dem Anwendungsprogramm kryptographische Sicherungsfunktionalität zur Verfügung. Bei dem ersten Sicherheitselement handelt es sich beispielsweise um ein hardware-, software- und/oder firmwarebasiertes Sicherheitselement. Beispielsweise umfasst das zweite Sicherheitselement eine eSIM oder eine eUICC.

Die Erfindung beschreibt ein Verfahren zur sicheren Authentisierung eines Nutzers an einem mobilen Endgerät sowie der sicheren Authentifizierung des Nutzers durch ein weiteres Sicherheitselement auf dem entsprechenden mobilen Endgerät mit einer geräteherstellerunabhängigen Sicherheitsapplikation bzw. Sicherheitsapplet.

Insbesondere wird eine sichere Verwendung von Merkmalen zur Nutzerauthentifizierung, wie etwa biometrische Merkmale, zur Authentifizierung gegenüber einem geräteherstellerunabhängigen Anwendungsprogramm bzw. Sicherheitsapplet des Anwendungsprogramms ermöglicht.

Nach Ausführungsformen wird zur Authentifizierung des Nutzers gegenüber dem Anwendungsprogramm ein Challenge-Response Verfahren verwendet, welches zwischen dem gerätespezifischen ersten Sicherheitselement und dem geräteunabhängigen zweiten Sicherheitselement ausgeführt wird. Bei dem zweiten Sicherheitselement bzw. dem Sicherheitsapplet des Anwendungsprogramms handelt es sich beispielsweise um ein anwendungsspezifisches Sicherheitselement bzw. Sicherheitsapplet.

Zum Implementieren der kryptographisch gesicherten Verbindung zwischen dem ersten und dem zweiten Sicherheitselement wird beispielsweise in das geräteherstellerabhängige erste Sicherheitselement kryptographisches Schlüsselmaterial eingebracht und/oder in diesem erzeugt. Dies geschieht beispielsweise im Zuge einer Initialisierung des mobilen Endgeräts. Ferner wird in das geräteherstellerunabhängige Sicherheitsapplet des zweiten Sicherheitselements kryptographisches Schlüsselmaterial eingebracht und/oder in diesem erzeugt. Dies geschieht beispielsweise im Zuge einer Initialisierung des Sicherheitsapplets bzw. des zweiten Sicherheitselements. Das kryptographisch initialisierte erste Sicherheitselement kann einen kryptographischen Schlüssel des ersten Sicherheitselements in das Sicherheitsapplet des zweiten Sicherheitselements einbringen bzw. diesem zur Verfügung stellen und/oder das Sicherheitsapplet des zweiten Sicherheitselements kann einen kryptographischen Schlüssel des Sicherheitsapplets in das erste Sicherheitselement einbringen

bzw. diesem zur Verfügung stellen. Bei dem kryptographischen Schlüssel des ersten Sicherheitselements handelt es sich beispielsweise um einen öffentlichen kryptographischen Schlüssel eines dem ersten Sicherheitselements zugeordneten asymmetrischen kryptographischen Schlüsselpaars. Bei dem kryptographischen Schlüssel des Sicherheitsapplets handelt es sich beispielsweise um einen öffentlichen kryptographischen Schlüssel eines dem Sicherheitsapplet zugeordneten asymmetrischen kryptographischen Schlüsselpaars. Nach Ausführungsformen wird ein kryptographisches Geheimnis, beispielsweise ein kryptographischer Schlüssel, insbesondere ein symmetrischer kryptographischer Schlüssel zum Ausführen des Challenge-Response-Verfahren, erzeugt und übertragen. Beispielsweise erzeugt das erste Sicherheitselement das kryptographische Geheimnis und überträgt dieses unter Verwendung des von dem Sicherheitsapplet bereitgestellten kryptographischen Schlüssel in kryptographisch abgesicherter Weise an das Sicherheitsapplet. Beispielsweise erzeugt das Sicherheitsapplet das kryptographische Geheimnis und überträgt dieses unter Verwendung des von dem ersten Sicherheitselement bereitgestellten kryptographischen Schlüssel in kryptographisch abgesicherter Weise an das erste Sicherheitselement.

Ausführungsformen können den Vorteil haben, dass ein sicheres Verfahren zum Authentifizieren eines Nutzers des mobilen Endgeräts gegenüber dem Anwendungsprogram und damit eine sichere Authentisierung bereitgestellt wird. Das Verfahren ermöglicht ein Authentifizieren des Nutzers des mobilen Endgerätes unter Verwendung zweier Sicherheitselemente gegenüber dem Anwendungsprogramm bzw. dem Sicherheitsapplet, welches dem Anwendungsprogramm zugeordnet ist. Die Verwendung zweier unabhängiger Sicherheitselemente erlaubt es neben dem ersten Sicherheitselement, welches dem Betriebssystem zugeordnet und beispielsweise unter Kontrolle des Herstellers des mobilen Endgeräts steht, ein weiteres zweites Sicherheitselement zu verwenden, welches unabhängig von dem ersten Sicherheitselement ist und beispielsweise nicht unter der Kontrolle des Geräteherstellers steht. Nach Ausführungsformen steht das dem Anwendungsprogramm zugeordnete Sicherheitsapplet des zweiten Sicherheitselement beispielsweise unter der Kontrolle eines Herstellers des entsprechenden Anwendungsprogramms. Damit ermöglicht das Verfahren auch eine Authentisierung Nutzers gegen über dem Anwendungsprogramm unter Verwendung des mobilen Endgeräts.

Ausführungsformen können den Vorteil haben, dass eine gleichzeitige Bindung des Nutzers an zwei voneinander unabhängige Sicherheitselemente mit einer gegenseitigen sicheren Verschränkung der beiden Sicherheitselemente auf einem mobilen Endgerät implementiert wird. Die Bindung des Nutzers wird beispielsweise dadurch implementiert, dass das erste Sicherheitselement Zugriff auf Referenzwerte für die ein oder mehreren Authentifizierungsfaktoren des Nutzers besitzt. Beispielsweise sind die entsprechenden Referenzwerte in einem dem ersten Sicherheitselement zugeordneten Speicherbereich des mobilen Endgeräts gespeichert. Beispielsweise umfasst das Sicherheitselement den entsprechenden Speicherbereich. Beispielsweise sind die Referenzwerte außerhalb des Sicherheitselements gespeichert. Nach Ausführungsformen sind die Referenzwerte in einer kryptographisch gesicherten Form gespeichert, beispielsweise in verschlüsselter oder gehashter Form. Nach Ausführungsformen ist das erste Sicherheitselement unter Verwendung der entsprechenden Referenzwerte in der Lage den Nutzer anhand von mit dem Authentifizierungssensor erfassten Authentifizierungsfaktoren bzw. Authentifizierungsdaten zu authentifizieren. Dadurch kann eine Bindung des Nutzers an das erste Sicherheitselement implementiert werden. Das Ergebnis der Authentifizierung kann mittels des Challenge-Response-Verfahrens in kryptographisch gesicherter Weise an das zweite Sicherheitselement weitergeleitete werden, wodurch eine Bindung des Nutzers an das zweite Sicherheitselement implementiert werden kann. Im Ergebnis kann der Nutzer mithin gleichzeitig an beide Sicherheitselemente gebunden werden. Mittels des Challenge-Response-Verfahrens und den diesem zugrundeliegenden kryptographischen Mitteln der Sicherheitselemente kann somit eine gegenseitige sichere Verschränkung der beiden Sicherheitselemente auf dem Endgerät implementiert werden. Beispielsweise umfassen die kryptographischen Mittel einen symmetrischen Schlüssel, welcher in dem ersten Sicherheitselement und in dem zweiten Sicherheitselement gespeichert ist und eine kryptographische Verschränkung der beiden Sicherheitselement bereitstellt.

Eine Authentifizierung bezeichnet eine Verifizierung einer behaupteten Eigenschaft einer Entität, wie etwa einem Nutzer des mobilen Endgeräts. Im Zuge einer Authentifizierung wird beispielsweise eine entsprechender von dem Nutzer erbrachter Nachweis verifiziert. Die Entität führt durch ihren Beitrag zur Authentifizierung, d.h. durch Bereitstellen entsprechender Nachweise wie Authentifizierungsdaten bzw. Authentifizierungsfaktoren zur Prüfung, eine Authentisierung durch.

Eine Authentifizierung des Nutzers bezüglich der behaupteten Eigenschaft der Authentizität, beispielsweise der Authentizität seiner Person bzw. Identität, erlaubt es dem authentifizierten Nutzer weitere Aktionen durchzuführen. Beispielsweise werden dem Nutzer Zugangsrechte eingeräumt. Ein erfolgreich authentifizierter Nutzer gilt als authentisch. Eine abschließende Bestätigung einer Authentifizierung kann eine Autorisierung umfassen.

Der Nutzer kann sich auf verschiedene Weisen authentisieren. Er kann beispielsweise einen Nachweis einer Kenntnis, wie einer PIN oder einem Passwort, vorlegen, einen Nachweis eines Besitzes, wie etwa eines kryptographischen Schlüssels, eines Zertifikats oder eines elektronischen Geräts, und/oder einen Nachweis von Eigenschaften seiner Person selbst, wie biometrische Merkmale oder Verhaltensmerkmale.

Unter einem mobilen Endgerät wird ein mobiles tragbares Kommunikationsgerät, wie beispielsweise ein Smartphone, ein Tablet oder eine Smartwatch verstanden.

Unter einem Authentifizierungssensor wird ein Sensor zum Erfassen von Authentifizierungsdaten des Nutzers des mobilen Endgeräts verstanden. Die Authentifizierungsdaten können beispielsweise biometrische Daten des Nutzers umfassen. Der Authentifizierungssensor kann zum Erfassen biometrischer Daten des Nutzers konfiguriert sein. Biometrische Daten können beispielsweise umfassen: Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster. Die Authentifizierungsdaten können beispielsweise ein Wissen des Nutzers umfassen, wie eine PIN oder Passwort. Der Authentifizierungssensor kann eine Eingabevorrichtung zur Eingabe von Authentifizierungsdaten, wie etwa eine PIN oder ein Passwort umfassen. Die Eingabevorrichtung kann beispielsweise eine Tastatur und/oder einen Touchscreen umfassen.

Ein Challenge-Response-Verfahren stellt ein sicheres Authentifizierungsverfahren einer ersten Instanz gegenüber einer zweiten Instanz auf Basis von Wissen dar. Beispielsweise wird das erste Sicherheitselement durch das Sicherheitsapplet des zweiten Sicherheitselements unter Verwendung eines Challenge-Response-Verfahrens authentifiziert. Gleichzeitig stellt die Response eine Bestätigung einer erfolgreichen Nutzerauthentifizierung dar, falls die Response nur unter der Voraussetzung einer erfolgreichen Nutzerauthentifizierung durch das erste Sicherheitselement erzeugt wird. Somit weiß das Sicherheitsapplet, im Falle eines erfolgreichen Challenge-Response-Verfahrens nicht nur, dass die Nutzerauthentifizierung bestätigt wurde, sondern dass diese durch das erste Sicherheitselement bestätigt wurde und somit valide ist.

Im Zuge eines Challenge-Response-Verfahren stellt eine erste Instanz einer zweiten Instanz eine Aufgabe ("Challenge"), für welche die zweite Instanz eine korrekte Antwort ("Response") liefern muss. Durch das Bereitstellen der korrekten Antwort beweist die zweite Instanz, dass sie eine bestimmte Information, bei der es sich um ein gemeinsames Geheimnis ("Shared Secret") handelt, kennt. Vorteil ist dabei, dass das gemeinsame Geheimnis nicht mit übertragen wird und somit durch den Datenaustausch in Zuge des Challenge-Response-Verfahrens auch nicht kompromittiert werden kann.

Beispielsweise erzeugt die erste Instanz eine Zufallszahl ("Nonce") und sendet diese an die zweite Instanz. Die zweite Instanz verwendet das gemeinsame Geheimnis für eine kryptographische Transformation des Nonce und sendet das Resultat als Response zum Zwecke einer Authentifizierung der zweiten Instanz an die erste Instanz. Beispielsweise wird das Nonce mit dem gemeinsamen Geheimnis kombiniert und eine kryptographische Hashfunktion oder eine Verschlüsselung auf diese Kombination angewendet. Ferner kann das gemeinsame Geheimnis, etwa ein symmetrischer kryptographischer Schlüssel zum Verschlüsseln des Nonce verwendet werden. Die erste Instanz, welche sowohl das Nonce als auch das gemeinsame Geheimnis kennt kann beispielsweise dieselbe Berechnung wie die zweite Instanz ausführen und/oder eine Inverse Berechnung ausführen, z.B. das verschlüsselte Nonce unter Verwendung des gemeinsamen Geheimnisses wieder entschlüsseln. Stimmt das Ergebnis der Berechnung durch die erste Instanz mit dem Ergebnis der Berechnung der zweiten Instanz oder mit der Challenge überein, ist das Challenge-Response-Verfahren erfolgreich und die zweite Instanz erfolgreich authentifiziert. Ferner kann ein Challenge-Response-Verfahren auch auf einem asymmetrischen Kryptosystem beruhen und dem Nachweis eines Besitzes eines privaten und damit geheimen kryptographischen Schlüssels durch die zweite Instanz gegenüber der ersten Instanz dienen. Dabei kennt nur die zweite Instanz den entsprechenden privaten kryptographischen Schlüssel, welchen sie für eine kryptographische Transformation der Challenge, e.g. eines Nonce, verwendet. Bei der entsprechenden kryptographischen Transformation kann es sich beispielsweise um ein digitales Signieren handeln. Die erste Instanz kann unter Verwendung eines dem privaten kryptographischen Schlüssel zugehörigen öffentlichen kryptographischen Schlüssel anhand der Response prüfen, ob die zweite Instanz tatsächlich über Kenntnis des privaten kryptographischen Schlüssels verfügt, ohne dass die erste Instanz im Zuge der Prüfung selbst Kenntnis von dem privaten kryptographischen Schlüssel erlangt.

Unter einem Sicherheitselement, auch "Secure Element" oder "SE" genannt, wird ein gesichertes Element eines mobilen Endgeräts verstanden, welches kryptographische Mittel bereitstellt. Diese kryptographischen Mittel sind gegen Manipulation geschützt und beispielsweise über kryptographische Schlüssel nur für autorisierte Dienste und Anwendungen zugänglich. Insbesondere können die kryptographischen Mittel beispielsweise nur durch autorisierte Dienste und Anwendungen in das Sicherheitselement eingebracht, ergänzt, verändert und/oder gelöscht werden. Ein Sicherheitselement bietet mithin eine manipulationssichere Plattform, beispielsweise implementiert in Form eines sicheren Ein-Chip-Mikrocontroller, auf welcher Applets und/oder vertrauliche und/oder kryptografische Daten gemäß vordefinierten Regeln und Sicherheitsanforderungen von zuverlässig identifizierten vertrauenswürdigen Instanzen gespeichert und so berechtigten Anwendungsprogrammen und/oder Betriebssystemen zur Verfügung gestellt werden können. Ein Sicherheitselement kann eingebettete oder integriert sein, beispielsweise zerstörungsfrei lösbar oder fest verbunden, d.h. nicht zerstörungsfrei lösbar, eingebracht sein. Das Sicherheitselement kann beispielweise eine SIM, UICC, SmartMicroSD, Smartcard, eSE, eSIM oder eUICC umfassen. Beispielsweise sind auf einem Sicherheitselement kryptographische Schlüssel gespeichert, d.h. das Sicherheitselement umfasst einen Datentresor für kryptographische Schlüssel bzw. einen "Key Store". Ein solcher Key-Store bzw. Sicherheitselement kann auch als Teil des Hauptprozessors implementiert sein, beispielsweise in einer TEE (Trusted Excecution Environment). Beispielsweise kann das erste Sicherheitselement unter Verwendung einer TEE implementiert sein. Sicherheitselemente sind beispielsweise als Hardware und/oder Firmware implementiert. Nach Ausführungsformen können Sicherheitselemente bzw. Key Stores auch als Software implementiert sein. Zwei Sicherheitselemente sind beispielsweise unabhängig voneinander, wenn es keine gemeinsame Instanz gibt, welche zugriffsberechtigt für beide Sicherheitselemente ist.

Ein Anwendungsprogramm, auch Applikation oder kurz App genannt, bezeichnet ein Computerprogramm, welches nicht systemtechnische Funktionalität bereitstellt, unterstützt und/oder deren Bearbeitung ermöglicht.

Unter einem Applet wird ein Computerprogramm verstanden, welches nicht als eigenständige Anwendungsprogramm betrieben wird. Der Begriff "Applet" setzt sich aus den englischen Worten "Application", d.h. Anwendung bzw. Anwendungsprogramm und "Snippet", d.h. Schnipsel, zusammen.

Ein Betriebssystem bezeichnet ein Computerprogramm oder eine Zusammenstellung von Computerprogrammen, welche systemtechnische Funktionalitäten bereitstellen, unterstützen und/oder deren Bearbeitung ermöglichen. Durch ein Betriebssystem werden Systemressourcen zur Verfügung gestellt. Systemressourcen bezeichnen Systemelemente bzw. Hardwarekomponenten eines Computers, die von Prozessen zur korrekten Ausführung benötigt werden.

Ausführungsformen können den Vorteil haben, dass sie eine sichere Verwaltung digitaler Identitäten unter Verwendung eines mobilen Geräts ermöglichen. Hierzu kann das Anwendungsprogramm als ID-Anwendungsprogramm zum Verwalten von digitalen Identitäten bzw. von zu digitalen Identitäten gehörenden bzw. digitalen Identitäten definierenden Identitätsattributen. Es wird beispielsweise ein sicheres Anwendungsprogramm bzw. Applikation zum Verwalten digitaler Identitäten bereitgestellt, welches im Folgenden als ID-Anwendungsprogramm bezeichnet wird.

Dem ID-Anwendungsprogramm, welches auf dem mobilen Endgerät installiert und ausgeführt wird, ist zumindest ein Sicherheitsapplet zugeordnet. Das Sicherheitsapplet ist auf dem zweiten Sicherheitselement des mobilen Endgeräts installiert und wird dort ausgeführt. Das mobile Endgerät mit den von dem ID-Anwendungsprogramm verwalteten digitalen Identitäten kann verwendet werden zum Identifizieren und Authentifizieren, zum Übertragen von Identitätsdaten sowie zur Unterstützung von Absichtserklärungen im mobilen Kontext.

Nach Ausführungsformen kann die digitale Identität eine offiziell anerkannte Identität, wie zum Beispiel eine auf Grundlage eines offiziellen Ausweisdokuments, etwa eines Personalausweises oder Reisepasses, erstellte digitale Identität umfassen.

Die digitale Identität eines Nutzers ist eindeutig, d.h. einzigartig und unverwechselbar. Sie wird auf der Grundlage von Merkmalen, sog. Identitätsattributen, definiert. Eine digitale Identität umfasst beispielsweise personenbezogenen Daten. Personenbezogene Daten bezeichnen Daten, welche eine Identifikation einer Person ermöglichen oder einer Person zuordenbar sind, auf welche die personenbezogenen Daten bezogen sind.

Ein Nutzer kann über eine Mehrzahl von unterschiedlichen, anwendungsspezifischen digitalen Identitäten verfügen. Diese digitalen Identitäten können unterschiedlichen Sicherheitsanforderungen entsprechen.

Nach Ausführungsformen kann eine auf dem mobilen Endgerät gespeicherte und von der ID-Anwendungsprogramm bereitgestellte bzw. verwaltete digitale Identität ohne zusätzliche Hardware neben dem mobilen Endgerät zur Identifizierung und Authentifizierung des Nutzers des mobilen tragbaren Geräts verwendet werden.

Identitätsattribute werden beispielsweise von Service-Providern bzw. Dienstanbietern für Online-Dienst nachgefragt. Nach Ausführungsformen erfolgt eine Übertragung der von einem Dienstanbieter für seinen Online-Dienst benötigten Identitätsattribute verschlüsselt und authentisch. Beispielsweise wird unter Verwendung von Berechtigungszertifikaten geregelt, wer auf welche Identitätsattribute zugreifen darf bzw. eine Leseberechtigung für diese besitzt. Beispielsweise werden die benötigten Identitätsattribute von einem dazu mittels Berechtigungszertifikat berechtigten ID-Provider ausgelesen und dem anfragenden Dienstanbieter zur Verfügung gestellt. Nach Ausführungsformen stellt der ID-Provider dem anfragenden Dienstanbieter nur eine Bestätigung des oder der angefragten Identitätsattribute zur Verfügung.

Eine Zustimmung des Nutzers zur Verwendung der Identitätsattribute und/oder eine Nutzerauthentifizierung erfolgt beispielsweise unter Prüfung ein oder mehrerer Authentifizierungsfaktoren, wie etwa Passwort, PIN, Fingerabdruck oder Gesichtserkennung.

Nach Ausführungsformen umfasst das Challenge-Response-Verfahren ein Erzeugen einer Response und ein Validieren der Response. Das Erzeugen der Response umfasst ein Verschlüsseln der Challenge und das Validieren der Response umfasst ein Entschlüsseln der Response.

Ausführungsformen können den Vorteil haben, dass durch das Verschlüsseln Wissen des ersten Sicherheitselements nachgewiesen werden kann, etwa in Form des zum Verschlüsseln verwendeten kryptographischen Schlüssels, ohne dass das entsprechende Wissen zum Nachweis selbst übertragen werden muss. Bei dem entsprechenden kryptographischen Schlüssel oder einer Information zum Erzeugen desselben handelt es sich beispielsweise um ein gemeinsames Geheimnis des ersten Sicherheitselements und des Sicherheitsapplets. Da nur das erste Sicherheitselement und das Sicherheitsapplet das gemeinsame Geheimnis kennen, kann sich das Sicherheitselement durch das Challenge-Response-Verfahren in effizienter, effektiver und sicherer Weise durch das Sicherheitsapplet authentifiziert werden. Da die Voraussetzung für ein Senden der Response eine erfolgreiche Authentifizierung des Nutzers durch das erste Sicherheitselement ist, wird durch das erfolgreiche Challenge-Response-Verfahren zudem die erfolgreiche Nutzerauthentifizierung bestätigt und belegt. Mithin erfolgt durch das Challenge-Response-Verfahren eine Nutzerauthentifizierung gegenüber dem Sicherheitsapplet unter Verwendung des ersten Sicherheitselements.

Wird für die Verschlüsselung ein kryptographischer Schlüssel ausreichender Länge verwendet kann dies den Vorteil haben, dass dadurch die Entropie und mithin die Sicherheit des Authentifizierungsverfahrens erhöht werden kann.

Nach Ausführungsformen erfolgt das Verschlüsseln und Entschlüsseln unter Verwendung eines symmetrischen kryptographischen Schlüssels. Ausführungsformen können den Vorteil haben, dass ein symmetrischer kryptographischer Schlüssel eine schnelle, ressourcensparende und effektive Verschlüsselung wie auch Entschlüsselung ermöglicht.

Nach Ausführungsformen umfasst das Verfahren ferner ein Bereitstellen des symmetrischen Schlüssels. Der symmetrische Schlüssel kann beispielsweise durch das erste Sicherheitselement oder das Sicherheitsapplet erzeugt werden.

Nach Ausführungsformen umfasst das Bereitstellen des symmetrischen Schlüssels:
- Erzeugen des symmetrischen Schlüssels durch das erste Sicherheitselement,
- Verschlüsseln des erzeugten symmetrischen Schlüssels durch das erste Sicherheitselement unter Verwendung eines ersten öffentlichen kryptographischen Schlüssels eines dem Sicherheitsapplet zugeordneten ersten asymmetrischen kryptographischen Schlüsselpaars,
- Übertragen des verschlüsselten symmetrischen Schlüssels von dem ersten Sicherheitselement an das Sicherheitsapplet des zweiten Sicherheitselements,
- Entschlüsseln des verschlüsselten symmetrischen Schlüssels durch das Sicherheitsapplet unter Verwendung eines ersten privaten Schlüssels des ersten asymmetrischen kryptographischen Schlüsselpaars.

Ausführungsformen können den Vorteil haben, dass der durch das erste Sicherheitselement erzeugte symmetrische Schlüssel in sicherer Weise mit dem Sicherheitsapplet geteilt werden kann. Nur der Besitzer des zu dem ersten öffentlichen Schlüssel passenden ersten privaten Schlüssels, d.h. das Sicherheitsapplet, ist in der Lage den symmetrischen Schlüssel zu entschlüsseln und damit zu nutzen.

Nach Ausführungsformen umfasst das mobile Endgerät eine Kommunikationsschnittstelle zur Kommunikation über ein Netzwerk. Das Übertragen des verschlüsselten symmetrischen Schlüssels umfasst:
- Senden des verschlüsselten symmetrischen Schlüssels von dem ersten Sicherheitselement an das Anwendungsprogramm,
- Weiterleiten des verschlüsselten symmetrischen Schlüssels von dem Anwendungsprogramm unter Verwendung der Kommunikationsschnittstelle über das Netzwerk an einen externer Personalisierungsserver, welcher über eine Schreibberechtigung zum Schreiben in einen dem Sicherheitsapplet zugeordneten Speicherbereich des zweiten Sicherheitselements verfügt,
- Validieren der Schreibberechtigung des Personalisierungsservers zum Schreiben in den dem Sicherheitsapplet zugeordneten Speicherbereich des zweiten Sicherheitselements,
- auf ein erfolgreiches Validieren der Schreibberechtigung des Personalisierungsservers, Gewähren eines Schreibzugriffs des externen Personalisierungsservers über die Kommunikationsschnittstelle auf den Speicherbereich des zweiten Sicherheitselements,
- Schreiben des verschlüsselten symmetrischen Schlüssels in den Speicherbereich des zweiten Sicherheitselements, welcher dem Sicherheitsapplet zugeordnet ist.

Ausführungsformen können den Vorteil haben, dass die Sicherheit des zweiten Sicherheitselements bzw. des Sicherheitsapplets des zweiten Sicherheitselements erhöht werden kann. Nach Ausführungsformen gibt es zwei Wege kryptographische Schlüssel in das Sicherheitsapplet einzubringen: Entweder werden die entsprechenden kryptographischen Schlüssel von dem Sicherheitsapplet selbst erzeugt oder sie werden von einer externen Instanz eingebracht, welche eine Berechtigung dazu nachweisen kann, beispielsweise unter Verwendung eines Berechtigungszertifikats. Bei der externen Instanz handelt es sich in einem Ausführungsbeispiel beispielsweise um den Personalisierungsserver. Beispielsweise steht die externe Instanz unter der Kontrolle des Entwicklers/Herstellers des Anwendungsprogramms und des Sicherheitsapplets. Beispielsweise handelte es sich bei der externen Instanz um eine von dem Entwickler/Hersteller des Anwendungsprogramms unabhängige vertrauenswürdige dritte Instanz, welche von dem Entwickler/Hersteller des Anwendungsprogramms autorisiert wurde, externes Schlüsselmaterial und/oder externe Schlüssel in das Sicherheitsapplet einzubringen, beispielsweise im Auftrag des Entwicklers/Herstellers des Anwendungsprogramms und/oder unter Zustimmung des Entwicklers/Herstellers des Anwendungsprogramms. Um externes Schlüsselmaterial und/oder externe Schlüssel in das Sicherheitsapplet einbringen zu können reicht ein Besitz und/oder ein Zugriff auf das mobile Endgerät nicht aus. Vielmehr wird zusätzlich Kontrolle über eine von dem mobilen Endgerät unabhängige externe Instanz benötigt.

Nach Ausführungsformen umfasst das Verfahren ferner ein Initialisieren des Sicherheitsapplets in dem zweiten Sicherheitselement durch einen externen Initialisierungsserver. Der Initialisierungsserver umfasst eine Schreibberechtigung zum Initialisieren des Sicherheitsapplets in dem zweiten Sicherheitselement. Das Initialisieren umfasst:
- Validieren der Schreibberechtigung des Initialisierungsservers zum Initialisieren des Sicherheitsapplets in dem zweiten Sicherheitselement,
- auf ein erfolgreiches Validieren der Schreibberechtigung des Initialisierungsservers, Gewähren eines Schreibzugriffs des externen Initialisierungsservers über die Kommunikationsschnittstelle auf das zweite Sicherheitselement,
- Initialisieren des dem Sicherheitsapplet zugeordneten Speicherbereich des zweiten Sicherheitselements,
- Schreiben des ersten asymmetrischen Schlüsselpaars in den initialisierten Speicherbereich.

Ausführungsformen können den Vorteil haben, dass die Sicherheit des zweiten Sicherheitselements bzw. des Sicherheitsapplets des zweiten Sicherheitselements erhöht werden kann, da es nur die beiden bereits zuvor beschriebenen Wege gibt kryptographische Schlüssel in das Sicherheitsapplet einzubringen. Beispielsweise steht die externe Instanz unter der Kontrolle des Entwicklers/Herstellers des Anwendungsprogramms und des Sicherheitsapplets. Beispielsweise handelte es sich bei der externen Instanz um eine von dem Entwickler/Hersteller des Anwendungsprogramms unabhängige vertrauenswürdige dritte Instanz, welche von dem Entwickler/Hersteller des Anwendungsprogramms autorisiert wurde externes Schlüsselmaterial und/oder externe Schlüssel in das Sicherheitsapplet einzubringen, beispielsweise im Auftrag des Entwicklers/Herstellers des Anwendungsprogramms und/oder unter Zustimmung des Entwicklers/Herstellers des Anwendungsprogramms. Um externes Schlüsselmaterial und/oder externe Schlüssel in das Sicherheitsapplet einbringen zu können reicht ein Besitz und/oder ein Zugriff auf das mobile Endgerät nicht aus. Vielmehr wird zusätzlich Kontrolle über eine von dem mobilen Endgerät unabhängige externe Instanz benötigt. Bei der externen Instanz handelt es sich in einem Ausführungsbeispiel beispielsweise um den Initialisierungsserver. Der Initialisierungsserver kann von dem Personalisierungsserver abhängig, mit diesem identisch und/oder von diesem unabhängig sein.

Nach Ausführungsformen umfasst das Bereitstellen des symmetrischen Schlüssels:
- Erzeugen des symmetrischen Schlüssels durch zweite Sicherheitselement,
- Verschlüsseln des erzeugten symmetrischen Schlüssels durch das zweite Sicherheitselement unter Verwendung eines zweiten öffentlichen kryptographischen Schlüssels eines dem ersten Sicherheitselement zugeordneten zweiten asymmetrischen kryptographischen Schlüsselpaars,
- Übertragen des verschlüsselten symmetrischen Schlüssels von dem zweiten Sicherheitselement an das erste Sicherheitselement,
- Entschlüsseln des verschlüsselten symmetrischen Schlüssels durch das erste Sicherheitselement.

Ausführungsformen können den Vorteil haben, dass der durch das zweite Sicherheitselement, beispielsweise durch das Sicherheitsapplet, erzeugte symmetrische Schlüssel in sicherer Weise mit dem ersten Sicherheitselement geteilt werden kann. Nur der Besitzer des zu dem zweiten öffentlichen Schlüssel passenden zweiten privaten Schlüssels, d.h. das zweite Sicherheitselement, ist in der Lage den symmetrischen Schlüssel zu entschlüsseln und damit zu nutzen.

Nach Ausführungsformen erfolgt eine Kommunikation im Zuge des Challenge-Response-Verfahrens zwischen dem ersten Sicherheitselement und dem Sicherheitsapplet über das Anwendungsprogramm.

Ausführungsformen können den Vorteil haben, dass das Anwendungsprogramm das Challenge-Response-Verfahrens selbst nutzen kann. Nach Ausführungsformen kann sich das Anwendungsprogramm dadurch gegenüber dem Sicherheitsapplet authentifiziert. Beispielsweise sendet das Sicherheitsapplet die Challenge an das Anwendungsprogramm, welches im Zuge des Challenge-Response-Verfahrens mit einer von dem ersten Sicherheitssystem bereitgestellten Response antwortet. Diese Response dient als Nachweis eines Besitzes. Beispielsweise umfasst die Response die mit dem symmetrischen kryptographischen Schlüssel verschlüsselte Challenge und weist mithin den Besitz des entsprechenden symmetrischen kryptographischen Schlüssels nach. Aus Sicht des Sicherheitsapplet kann sich das Anwendungsprogramm durch Verwendung der Response gegenüber dem Sicherheitsapplet authentisieren bzw. wird durch das Sicherheitsapplet authentifiziert. Der symmetrische kryptographische Schlüssel stellt mithin einen Authentisierungsschlüssel zum Authentisieren des Anwendungsprogramms bzw. einen Authentifizierungsschlüssel zum authentifizieren des Anwendungsprogramms dar. Dieser symmetrische Schlüssel wird dem Anwendungsprogramm unter der Voraussetzung einer erfolgreichen Nutzerauthentifizierung von dem Betriebssystem zur Verfügung gestellt. Beispielsweise ist der symmetrische Schlüssel in einem Speicherbereich des ersten Sicherheitselements gespeichert sowie in einem dem Sicherheitsapplet zuggeordneten Speicherbereich des zweiten Sicherheitselements. Der Zugriff auf den symmetrischen Schlüssel in dem Speicherbereich des ersten Sicherheitselements setzt beispielsweise eine erfolgreiche Nutzerauthentifizierung gegenüber dem ersten Sicherheitselement unter Verwendung des Authentifizierungssensors voraus. Der Zugriff wird mithin durch die Nutzerauthentifizierung geschützt. Nach erfolgreicher Nutzerauthentifizierung durch das erste Sicherheitselement und erfolgreicher Authentifizierung des Anwendungsprogramms unter Verwendung der von dem ersten Sicherheitselement bereitgestellten Response kann das Sicherheitsapplet von dem Anwendungsprogramm und/oder über das Anwendungsprogramm aufgerufen werden. Beispielsweise kann das Sicherheitsapplet durch einen externen Server über ein Client-Modul des Anwendungsprogramms aufgerufen werden. Nach Ausführungsformen ist Voraussetzung für ein Aufrufen des Sicherheitsapplets durch einen externen Server ein erfolgreicher Berechtigungsnachweis des Servers zum Aufrufen gegenüber dem Anwendungsprogramm und/oder gegenüber dem Sicherheitsapplet. Ein entsprechender Berechtigungsnachweis kann beispielsweise eine Verwendung eines Berechtigungszertifikats durch den externen Server umfassen, welches die Berechtigung des externen Servers zum Zugriff auf das Sicherheitsapplet nachweist.

Nach Ausführungsformen ist ein Zugriff auf das Sicherheitsapplet, welches dem Anwendungsprogramm zugeordnet ist, nur über das Anwendungsprogramm möglich. Ausführungsformen können den Vorteil haben, dass somit die Sicherheit des Sicherheitsapplet erhöht und dieses vor unberechtigten Zugriffen geschützt werden kann.

Nach Ausführungsformen umfasst das Challenge-Response-Verfahren:
- Senden der Challenge des Sicherheitsapplets an das Anwendungsprogramm,
- Weiterleiten der Challenge von dem Anwendungsprogramm an das erste Sicherheitselement,
- auf eine erfolgreiche Authentifizierung des Nutzers durch das Betriebssystem hin, Erzeugen der Response durch das erste Sicherheitselement,
- Senden der Response von dem ersten Sicherheitselement an das Anwendungsprogramm,
- Weiterleiten der Response von dem Anwendungsprogramm an das Sicherheitsapplet,
- Validieren der entschlüsselten Response durch das Sicherheitsapplet.

Ausführungsformen können den Vorteil haben, dass das Anwendungsprogramm das Challenge-Response-Verfahrens selbst nutzen kann, beispielsweise zu Authentifizierung gegenüber dem Sicherheitsapplet. Ist der Zugriff auf das Sicherheitsapplet nur über das Anwendungsprogramm möglich, kann ferner die Sicherheit des Sicherheitsapplet erhöht und dieses vor unberechtigten Zugriffen geschützt werden kann.

Nach Ausführungsformen umfasst die Authentifizierungsanfrage die Challenge und das Erzeugen der Response erfolgt auf die erfolgreiche Authentifizierung des Nutzers hin. Ausführungsformen können den Vorteil haben, dass das Challenge-Response-Verfahren in effizienter und effektiver Weise implementiert werden kann. Zugleich belegt und bestätigt die Response die erfolgreiche Authentifizierung des Nutzers.

Nach Ausführungsformen umfasst das Authentifizieren des Nutzers:
- Erfassen zumindest eines Authentifizierungsfaktors des Nutzers unter Verwendung des Authentifizierungssensor,
- Validieren des erfassten Authentifizierungsfaktors unter Verwendung des ersten Sicherheitselements.

Ausführungsformen können den Vorteil haben, dass ein effektives und sicheres Verfahren zum Authentifizieren des Nutzers bereitgestellt wird.

Nach Ausführungsformen umfasst das Bestätigen der erfolgreichen Authentifizierung des Nutzers ein Senden einer Authentifizierungsbestätigung des Sicherheitsapplets an das Anwendungsprogramm auf eine erfolgreiche Validierung der Response hin.

Ausführungsformen können den Vorteil haben, dass die Authentifizierung dem Anwendungsprogramm gegenüber bestätigt wird. Ferner kann das Anwendungsprogramm die Authentifizierungsbestätigung als Nachweis für die erfolgreiche Authentifizierung nutzen. Nach Ausführungsformen ist ein Vorliegen einer Authentifizierungsbestätigung eine Voraussetzung für ein Ausführen von ein oder mehreren Funktionen des Anwendungsprogramms.

Nach Ausführungsformen handelt es sich bei dem Anwendungsprogramm um ein ID-Anwendungsprogramm, welches dazu konfiguriert ist ein oder mehrere dem Nutzer zugeordnete Identitätsattribute zu verwalten.

Ausführungsformen können den Vorteil haben, dass das eine ID-Anwendungsprogramm eine oder mehrere auf den Identitätsattributen basierende digitale Identitäten des Nutzers bereitstellen kann. Durch das Authentifizieren des Nutzers gegenüber dem ID-Anwendungsprogramm kann unter Verwendung des ersten Sicherheitselements und des Sicherheitsapplets eine kryptographisch gesicherte Verknüpfung zwischen der realen Welt, d.h. der Person des Nutzers, und der digitalen Welt, d.h. den dem Nutzer zugeordneten digitalen Identitätstattributen, implementiert werden.

Nach Ausführungsformen setzt eine Nutzung der Identitätsattribute eine erfolgreiche Authentifizierung des Nutzers des mobilen Endgeräts voraus.

Die Identitätsattribute definieren beispielsweise eine digitale Identität. Diese digitale Identität kann auf einer von einem ID-Token bereitgestellten primären Identität beruhen und/oder von dieser primären Identität abgeleitet sein. Nach Ausführungsformen kann die digitale Identität eine Kopie der primären Identität sein.

Nach Ausführungsformen kann die von dem mobilen Endgerät bereitgestellte digitale Identität ohne weitere nutzerseitige Hardware zum Authentisieren und/oder Identifizieren des Nutzers verwendet werden.

Nach Ausführungsformen werden die Identitätsattribute aus einem ID-Token ausgelesen, welches eine die Identitätsattribute umfassende primäre Identität bereitstellt. Das Auslesen kann beispielsweise kontaktlos erfolgen, etwa unter Verwendung einer NFC-Kommunikation. In diesem Fall umfasst das mobile Endgerät beispielsweise Kommunikationsschnittstelle für eine kontaktlose Kommunikation, wie etwa eine NFC-Kommunikation.

Unter einem "ID-Token" wird hier eine Vorrichtung verstanden, wie beispielsweise ein tragbares elektronisches Gerät, zum Beispiel in Form eines sogenannten USB-Sticks, einer Chipkarte, insbesondere mit RFID- und/oder NFC-Schnittstelle, oder eines Dokuments.

Unter einem "Dokument" wird insbesondere ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem ID-Token um ein Machine-Readable Travel Document, wie beispielsweise von der Internationalen Luftfahrtbehörde (ICAO) und/oder dem BSI standardisiert, handeln. Das Dokument weist beispielsweise RFID- und/oder NFC-Schnittstellen auf.

Nach Ausführungsformen weist der ID-Token keine eigene Energieversorgung auf. Als Energiequelle kann vielmehr eine Vorrichtung zum "Ernten" ("energy harvesting") von Energie dienen, welche von dem mobilen Endgerät an den ID Token übertragen wird, wie beispielsweise eine RFID-Antenne. Nach Ausführungsformen weist der ID-Token eine eigene Energieversorgung, wie etwa einen Akkumulator und/oder eine Batterie auf.

Nach Ausführungsformen ist das ID-Anwendungsprogramm dazu konfiguriert ein oder mehrere der Identitätsattribute des Nutzers an ein weiteres Endgerät zu senden. Ausführungsformen können den Vorteil haben, dass das Senden der Identitätsattribute des Nutzers eine erfolgreiche Authentifizierung des Nutzers des mobilen Endgeräts voraussetzt. Somit kann eine sichere Nutzung der Identitätsattribute allein durch den Nutzer selbst und/oder mit dessen Zustimmung sichergestellt werden.

Das Senden der Identitätsattribute kann beispielsweise unter Verwendung deiner kabellosen Kommunikationsverbindung, wie etwa einer NFC-Verbindung, einer Bluetooth-Verbindung oder einer WiFi-Verbindung erfolgen.

Nach Ausführungsformen ist das ID-Anwendungsprogramm dazu konfiguriert ein oder mehrere der Identitätsattribute des Nutzers unter Verwendung der Kommunikationsschnittstelle über ein Netzwerk an einen ID-Provider-Server zum Bereitstellen für einen Service-Provider-Server und/oder zur Bestätigung gegenüber dem Service-Provider-Server zu senden.

Ausführungsformen können den Vorteil haben, dass ein sicheres Bereitstellen der Identitätsattribute des Nutzers gewährleistet werden kann, wobei das Bereitstellen eine Nutzerauthentifizierung voraussetzt und nur durch eine dazu berechtigte externe Instanz, d.h. den ID-Provider erfolgt.

Ein Senden von Identitätsattributen an den ID-Provider-Server setzt beispielsweise eine Authentifizierung des ID-Provider-Servers, einen Nachweis einer Berechtigung seitens des ID-Provider-Servers zum Zugriff auf die Identitätsattribute, einen Aufbau eines verschlüsselten Kanals zur sicheren Übertragung der Identitätsattribute und/oder eine Sicherung der Authentizität der übertragen Identitätsattribute voraus.

Die Authentizität der übertragen Identitätsattribute kann beispielsweise durch Verwendung eines Message Authentication Codes (MAC) sichergestellt werden. Ein MAC wird beispielsweise unter Verwendung eines MAC-Algorithmus berechnet, welchem zu schützende Daten, d.h. die Identitätsattribute, und ein kryptographischer Schlüssel, beispielsweise ein symmetrischer kryptographischer Schlüssel, als Eingabedaten zur Verfügung gestellt werden. Unter Verwendung dieser Eingabedaten berechnet der MAC-Algorithmus eine Prüfsumme, welche als MAC dient. Zum Berechnen eines MAC Zum Berechnen von MACs können beispielsweise Blockchiffren oder Hash-Funktionen verwendet werden. Als MAC kann beispielsweise ein HMAC (Keyed-Hash Message Authentication Code) verwendet werden, für dessen Konstruktion eine kryptografische Hash-Funktion, wie beispielsweise der Secure Hash Algorithm (SHA), und ein geheimer kryptographischer Schlüssel, beispielsweise ein symmetrischer kryptographischer Schlüssel, verwendet wird.

Zur Sicherung einer Datenübertragung, beispielsweise einer Übertragung von Identitätsattributen, wird zwischen Sender, beispielsweise das Sicherheitsapplet, und Empfänger, beispielsweise dem ID-Provider-Server, ein kryptographischer Schlüssel, beispielsweise ein symmetrischer kryptographischer Schlüssel, vereinbart. Der Sender verwendet diesen kryptographischen Schlüssel zum Berechnen eines MACs der zu übertragenden Daten und sendet den berechneten MAC zusammen mit den zu übertragenden Daten an den Empfänger. Der Empfänger berechnet seinerseits einen MAC für die empfangenen Daten unter Verwendung des kryptographischen Schlüssels und vergleicht das Ergebnis mit dem empfangenen MAC. Im Falle einer Übereinstimmung zwischen berechnetem MAC und empfangenen MAC berechnet ist die Integritätsprüfung erfolgreich und die empfangenen Daten werden als authentisch angesehen.

Im Falle eines MAC müssen sowohl Sender als auch Empfänger Kenntnis von dem verwendeten kryptographischen Schlüssel haben im Gegensatz zu einer Verwendung von reinen Hashfunktionen oder von Signaturen. Im Falle von reinen Hashfunktionen kommen beispielsweise keine kryptographischen Schlüssel zum Einsatz. Falls die Hashfunktionen öffentlich sind, kann jeder den Hashwert berechnen, insbesondere für manipulierte Nachrichten. Im Falle einer Signatur kennt nur der Signierende den zum Erstellen der Signatur verwendeten privaten kryptographischen Schlüssel, d.h. Signaturschlüssel, eines für die Signatur verwendeten asymmetrischen Schlüsselpaars. Der Signaturempfänger verfügt lediglich über den öffentlichen Schlüssel, d.h. Signaturprüfschlüssel, des für die Signatur verwendeten asymmetrischen Schlüsselpaars. Der Signaturempfänger kann die Signatur mithin prüfen unter Verwendung des Signaturprüfschlüssels, aber nicht selbst berechnen.

Beispielsweise kann eine von dem mobilen Endgerät bereitgestellte digitale Identität für ein Inanspruchnehmen eines von einem Service-Provider-Server bzw. Dienstanbieter-Server bereitgestellten Webservice verwendet werden. Beispielsweise kann das ID-Anwendungsprogramm zum Registrieren bei dem Webservice verwendet werden. Hierzu ruft der Nutzer mit einem mobilen Browser des mobilen Endgeräts eine Website des Dienstanbieters auf oder kontaktiert den Dienstanbieter unter Verwendung einem auf dem mobilen Endgerät installierten Anwendungsprogramm des Dienstanbieters. Beispielsweise klickt der Nutzer auf eine Login-Schaltfläche. Beispielsweise wählt der Nutzer eine Registrierung unter Verwendung des ID-Anwendungsprogramms. Daraufhin wird das ID-Anwendungsprogramm gestartet und der Nutzer wird von dem ID-Anwendungsprogramm aufgefordert, sich gegenüber dem ID-Anwendungsprogramm unter Verwendung des mobilen Endgeräts zu authentifizieren. Auf ein erfolgreiches Authentifizieren des Nutzers gegenüber dem ID-Anwendungsprogramm, wird eine sichere Verbindung zwischen dem Sicherheitsapplet und dem Service-Provider-Server aufgebaut. Beispielsweise handelt es sich bei der sicheren Verbindung um eine verschlüsselte, insbesondere eine mittels Ende-zu-Ende-Verschlüsselung verschlüsselte Verbindung. Beispielsweise umfasst der Aufbau der sicheren Verbindung eine gegenseitige Authentifizierung von auslesendem Service-Provider-Server und Sicherheitsapplet, d.h. einer Authentifizierung des auslesenden Servers durch das Sicherheitsapplet und einer Authentifizierung des Sicherheitsapplets durch den auslesenden Server. Über diese beispielsweise mittels Verschlüsselung gesicherten Verbindung können zur Registrierung erforderliche Identitätsattribute, etwa personenbezogene Date des Nutzers, wie beispielsweise Vorname, Nachname, Geburtsdatum, an den Service-Provider-Server übermittelt werden. Nach Ausführungsformen sieht der Nutzer dabei, welche Art von personenbezogenen Daten an den Service-Provider-Server weitergeleitet werden sollen und kann deren Übertragung durch eine Nutzerauthentifizierung zustimmen. Im Falle einer erfolgreichen Nutzerverifizierung werden die erforderlichen Identitätsattribute an den Service-Provider-Server gesendet und der Nutzer wird zu einer authentifizierten Web-Sitzung mit dem Service-Provider weitergeleitet.

Nach Ausführungsformen umfasst das ID-Anwendungsprogramm ein ID-Verwaltungsmodul, welches eine Mehrzahl von ID-Profilen verwaltet, wobei jedem der ID-Profile jeweils ein unabhängiges Sicherheitsapplet in dem zweiten Sicherheitselement zugeordnet ist.

Ausführungsformen können den Vorteil haben, dass durch das ID-Anwendungsprogramm eine Mehrzahl unterschiedlicher ID-Profile und mithin digitalen Identitäten des Nutzers verwaltet werden können. Jeder dieser digitalen Identitäten des Nutzers ist ein eigenes von den weiteren Sicherheitsapplets unabhängiges Sicherheitsapplet zugordnet. Mithin ist jede digitale Identität durch ein eigens Sicherheitsapplet abgesichert. Beispielsweise handelt es sich bei ein oder mehreren der digitalen Identitäten um digitale Identitäten des Nutzers, welche das ID-Anwendungsprogramm für andere Instanzen verwaltet, wie beispielsweise andere Anwendungsprogramme und/oder Service-Provider. Beispielsweise können den unterschiedlichen ID-Profilen bzw. digitalen Identitäten unterschiedliche Sicherheitsniveaus zugeordnet sein, welche durch das jeweils zugeordnete Sicherheitsapplet zu erfüllen sind. Ferner können für unterschiedlichen ID-Profilen bzw. digitalen Identitäten jeweils unterschiedliche Authentifizierungsfaktoren in dem ersten Sicherheitselement festgelegt und dem jeweiligen Profil bzw. dem dem jeweiligen Profil zugeordneten Sicherheitsapplet zugeordnet sein. Mithin muss der Nutzer in diesem Fall für unterschiedliche digitale Identitäten unterschiedliche Authentifizierungsfaktoren für eine erfolgreiche Authentifizierung nachweisen. Die einzelnen Authentifizierungsfaktoren und/oder deren Kombinationen können unterschiedliche Sicherheitsniveaus erfüllen, beispielsweise aufgrund unterschiedlicher Entropien.

Nach Ausführungsformen ist jedem der ID-Profile jeweils ein Satz von ein oder mehreren Identitätsattributen zugeordnet.

Ausführungsformen umfassen ferner ein mobiles Endgerät zum Authentifizieren eines Nutzers gegenüber einem auf einem mobilen Endgerät installierten Anwendungsprogramm, wobei das mobile Endgerät einen Prozessor umfasst, wobei auf dem Endgerät ein Betriebssystem installiert ist, wobei das Betriebssystem dazu konfiguriert ist zumindest einen Authentifizierungssensor des Endgeräts zum Erfassen zumindest eines Authentifizierungsfaktors des Nutzers zu steuern, wobei das Endgerät ein dem Betriebssystem zugeordnetes erstes Sicherheitselement umfasst, wobei das erste Sicherheitselement kryptographische Mittel zum Ausführen eines Challenge-Response-Verfahrens umfasst,
wobei das Endgerät ferner ein von dem ersten Sicherheitselement unabhängiges zweites Sicherheitselement mit einem dem Anwendungsprogramm zugeordneten Sicherheitsapplet umfasst, wobei das Sicherheitsapplet kryptographische Mittel zum Ausführen eines Challenge-Response-Verfahrens umfasst,
wobei der Prozessor dazu konfiguriert ist ein Verfahren zum Authentifizieren eines Nutzers gegenüber einem auf einem mobilen Endgerät installierten Anwendungsprogramm auszuführen, welches umfasst:
   - auf eine Authentifizierungsanfrage des Anwendungsprogramms hin, Authentifizieren des Nutzers durch das Betriebssystem unter Verwendung des Authentifizierungssensors und des ersten Sicherheitselements,
   - Ausführen eines Challenge-Response-Verfahrens zwischen dem ersten Sicherheitselement und dem Sicherheitsapplet des zweiten Sicherheitselements, wobei ein erfolgreiches Ausführen des Challenge-Response-Verfahrens eine erfolgreiche Authentifizierung des Nutzers durch das Betriebssystem bestätigt,
   - auf ein erfolgreiches Ausführen des Challenge-Response-Verfahrens hin, Bestätigen der erfolgreichen Authentifizierung des Nutzers gegenüber dem Anwendungsprogramm durch das Sicherheitsapplet.

Nach Ausführungsformen ist das mobile Endgerät dazu konfiguriert jede der zuvor beschrieben Ausführungsformen des Verfahrens zum Authentifizieren des Nutzers gegenüber dem auf dem mobilen Endgerät installierten Anwendungsprogramm auszuführen.

Ausführungsformen umfassen ferner ein System. Das System umfasst ein mobiles Endgerät nach einer der zuvor beschrieben Ausführungsformen mit einer Kommunikationsschnittstelle zur Kommunikation über ein Netzwerk und einen Initialisierungsserver. Der Initialisierungsserver ist zum Initialisieren des Sicherheitsapplets in dem zweiten Sicherheitselement konfiguriert und umfasst eine Schreibberechtigung zum Initialisieren des Sicherheitsapplets in dem zweiten Sicherheitselement.

Das Initialisieren umfasst:
- Validieren der Schreibberechtigung des Initialisierungsservers zum Initialisieren des Sicherheitsapplets in dem zweiten Sicherheitselement,
- auf ein erfolgreiches Validieren der Schreibberechtigung des Initialisierungsservers, Gewähren eines Schreibzugriffs des externen Initialisierungsservers über die Kommunikationsschnittstelle auf das zweite Sicherheitselement,
- Initialisieren des dem Sicherheitsapplet zugeordneten Speicherbereich des zweiten Sicherheitselements,
- Schreiben des ersten asymmetrischen Schlüsselpaars in den initialisierten Speicherbereich.

Nach Ausführungsformen ist das System dazu konfiguriert jede der zuvor beschrieben Ausführungsformen des Verfahrens zum Authentifizieren des Nutzers gegenüber dem auf dem mobilen Endgerät installierten Anwendungsprogramm auszuführen.

Ausführungsformen umfassen ferner ein System. Das System umfasst ein mobiles Endgerät nach einer der zuvor beschrieben Ausführungsformen mit einer Kommunikationsschnittstelle zur Kommunikation über ein Netzwerk und einen Personalisierungsserver. Der Personalisierungsserver ist zum Personalisieren des Sicherheitsapplets konfiguriert und umfasst eine Schreibberechtigung zum Schreiben in einen dem Sicherheitsapplet zugeordneten Speicherbereich des zweiten Sicherheitselements.

Das Personalisieren umfasst:
- Erzeugen eines symmetrischen Schlüssels durch das erste Sicherheitselement,
- Verschlüsseln des erzeugten symmetrischen Schlüssels durch das erste Sicherheitselement unter Verwendung eines ersten öffentlichen kryptographischen Schlüssels eines dem Sicherheitsapplet des zweiten Sicherheitselements zugeordneten ersten asymmetrischen kryptographischen Schlüsselpaars,
- Senden eines verschlüsselten symmetrischen Schlüssels von dem ersten Sicherheitselement an das Anwendungsprogramm,
- Weiterleiten des verschlüsselten symmetrischen Schlüssels von dem Anwendungsprogramm unter Verwendung der Kommunikationsschnittstelle über das Netzwerk an den Personalisierungsserver,
- Validieren der Schreibberechtigung des Personalisierungsservers zum Schreiben in den dem Sicherheitsapplet zugeordneten Speicherbereich des zweiten Sicherheitselements,
- auf ein erfolgreiches Validieren der Schreibberechtigung des Personalisierungsservers, Gewähren eines Schreibzugriffs des externen Personalisierungsservers über die Kommunikationsschnittstelle auf den Speicherbereich des zweiten Sicherheitselements,
- Schreiben des verschlüsselten symmetrischen Schlüssels in den Speicherbereich des zweiten Sicherheitselements, welcher dem Sicherheitsapplet zugeordnet ist.

Nach Ausführungsformen ist das System dazu konfiguriert jede der zuvor beschrieben Ausführungsformen des Verfahrens zum Authentifizieren des Nutzers gegenüber dem auf dem mobilen Endgerät installierten Anwendungsprogramm auszuführen.

Ausführungsformen umfassen ferner ein System. Das System umfasst ein mobiles Endgerät nach einer der zuvor beschrieben Ausführungsformen mit einer Kommunikationsschnittstelle zur Kommunikation über ein Netzwerk und einen ID-Provider-Server. Bei dem Anwendungsprogramm handelt es sich um ein ID-Anwendungsprogramm, welches dazu konfiguriert ist ein oder mehrere in dem mobilen Endgerät gespeicherte und dem Nutzer zugeordnete Identitätsattribute zu verwalten. Der ID-Provider-Server ist zum Bereitstellen und/oder Bestätigen von ein oder mehreren der Identitätsattribute des Nutzers für einen Service-Provider-Server konfiguriert und umfasst eine Leseberechtigung zum Lesen ein oder mehrere der Identitätsattribute des Nutzers. Das Bereitstellen und/oder Bestätigen von ein oder mehreren der Identitätsattribute des Nutzers für einen Service-Provider-Server umfasst:
- Validieren der Leseberechtigung des ID-Provider-Server zum Lesen ein oder mehrere der Identitätsattribute des Nutzers,
- auf ein erfolgreiches Validieren der Leseberechtigung, Senden ein oder mehrere der Identitätsattribute des Nutzers an den ID-Provider-Server,
- Signieren der gesendeten ein oder mehrere der Identitätsattribute des Nutzers durch den ID-Provider-Server,
- Senden der signierten ein oder mehrere der Identitätsattribute des Nutzers an den Service-Provider-Server.

Nach Ausführungsformen ist das System dazu konfiguriert jede der zuvor beschrieben Ausführungsformen des Verfahrens zum Authentifizieren des Nutzers gegenüber dem auf dem mobilen Endgerät installierten Anwendungsprogramm auszuführen.

Im Weiteren werden Ausführungsformen der Erfindung mit Bezugnahme auf die Zeichnungen näher erläutert. Es zeigen:
- Figur 1: ein schematisches Diagramm eines exemplarischen mobilen Endgeräts,
- Figur 2: ein schematisches Diagramm eines exemplarischen mobilen Endgeräts,
- Figur 3: ein Flussdiagramm eines exemplarischen Verfahrens zum Authentifizieren eines Nutzers,
- Figur 4: ein Flussdiagramm eines exemplarischen Verfahrens zum Authentifizieren eines Nutzers,
- Figur 5: ein schematisches Diagramm eines exemplarischen mobilen Endgeräts,
- Figur 6: ein Flussdiagramm eines exemplarischen Verfahrens zum Bereitstellen eines symmetrischen Schlüssels,
- Figur 7: ein Flussdiagramm eines exemplarischen Verfahrens zum Initialisieren eines Speicherbereich eines Sicherheitsapplets, und
- Figur 8: ein schematisches Diagramm eines exemplarischen Systems.

Elemente der nachfolgenden Ausführungsformen, die einander entsprechen, werden mit denselben Bezugszeichen gekennzeichnet.

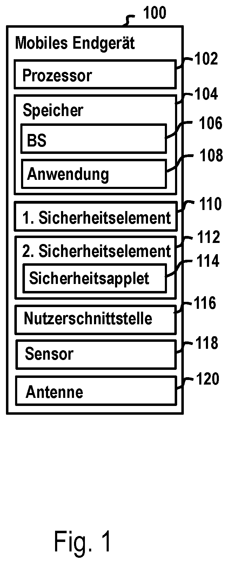

Figur 1 zeigt ein exemplarisches mobiles Endgerät 100, beispielsweise ein Smartphone, welches einen Speicher 104 mit Programminstruktionen umfasst, welche von einem Prozessor 102 ausgeführt werden. Die Programminstruktionen können beispielsweise ein auf dem mobiles Endgerät 100 installierten Betriebssystems 106 und ein Anwendungsprogramms 108 umfassen. Ferner umfasst das mobile Endgerät zumindest zwei Sicherheitselemente 110, 112, welche beispielsweise jeweils als eSim und/oder eUICC implementiert sein können. Das erste Sicherheitselement 110 ist dem Betriebssystem zugeordnet und stellt für dieses kryptographische Mittel bereit, wie beispielsweise kryptographische Schlüssel, kryptographische Funktionen und/oder kryptographische Protokolle. Das erste Sicherheitselement 110 stellt beispielsweise einen Key Store bzw. Schlüsselspeicher zum Speichern von kryptographischen Schlüsseln bereit, wie etwa symmetrischer, öffentlicher und/oder privater kryptographischer Schlüssel, und von Zertifikaten, wie beispielsweise Berechtigungszertifikate, Public-Key-Zertifikate und/oder Attributzertifikate. Die von dem ersten Sicherheitselement 110 bereitgestellten kryptographischen Mittel versetzten das Betriebssystem 106 dazu in die Lage ein Challenge Response-Verfahrens auszuführen bzw. an diesem teilzunehmen. Auf dem zweiten Sicherheitselement 112 ist ein dem Anwendungsprogramm 108 zugeordnetes Sicherheitsapplet 114 installiert. Dieses Sicherheitsapplet 114 stellt kryptographische Mittel für das Anwendungsprogramm 108 bereit, wie beispielsweise kryptographische Schlüssel, kryptographische Funktionen und/oder kryptographische Protokolle. Das Sicherheitsapplet 114 bzw. ein dem Sicherheitsapplet 114 zugeordneter Speicherbereich des zweiten Sicherheitselements 112 stellt beispielsweise einen Key Store bzw. Schlüsselspeicher zum Speichern von kryptographischen Schlüsseln bereit, wie etwa symmetrischer, öffentlicher und/oder privater kryptographischer Schlüssel, und von Zertifikaten, wie beispielsweise Berechtigungszertifikate, Public-Key-Zertifikate und/oder Attributzertifikate. Die von dem zweiten Sicherheitselement 112 bereitgestellten kryptographischen Mittel versetzten das Anwendungsprogramm 108 dazu in die Lage ein Challenge Response-Verfahrens auszuführen bzw. an diesem teilzunehmen. Ferner umfasst das mobile Endgerät 100 eine Nutzerschnittelle 116, welche beispielsweise ein Display, insbesondere ein Touchscreen, umfasst. Unter Verwendung des Nutzerschnittelle 116, kann der Nutzer mit dem mobiles Endgerät 100 interagieren. Beispielsweise kann der Nutzer zum Bereitstellen von Authentifizierungsmerkmalen aufgefordert werden. Zum Erfassen von Authentifizierungsmerkmalen des Nutzers umfasst das mobile Endgerät 100 einen Authentifizierungssensor 118, welcher beispielsweise in die Nutzerschnittstelle 116 integriert oder als eigenständige Komponente implementiert sein kann. Schließlich umfasst das mobile Endgerät 100 eine Kommunikationsschnittstelle bzw. Antenne 120, welche konfiguriert ist für eine kabellose Kommunikation, beispielsweise über ein Netzwerk.

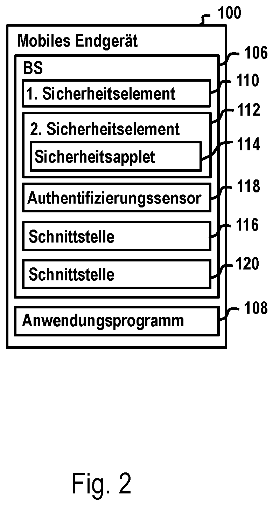

Figur 2 zeigt ein exemplarisches mobiles Endgerät 100, auf welchem ein Betriebssystem 106 installiert ist, welches die Ressourcen des mobiles Endgerät 100 verwaltet und dem Anwendungsprogramm 108 zur Verfügung stellt. Die verwalteten Ressourcen umfassen beispielsweise die beiden Sicherheitselemente 110, 112, den Authentifizierungssensor 118, die Nutzerschnittstelle 116 und die Kommunikationsschnittstelle 120. Dabei wird das zweite Sicherheitselement 112 zwar beispielsweise von dem Betriebssystem 106 bereitgestellt bzw. verwaltet, das von dem zweiten Sicherheitselement 112 umfasste Sicherheitsapplet 114 ist jedoch dem Anwendungsprogramm 108 zugeordnet, d.h. Sicherheitsapplet 114 stellt nur dem Anwendungsprogramm 108 kryptographische Mittel zur Verfügung. Das Betriebssystem 106 kann diese kryptographische Mittel nicht nutzen. Für kryptographische Aufgaben, etwa im Zuge einer Verwendung des Authentifizierungssensors 118 oder der Kommunikationsschnittelle 120, steht dem Betriebssystem 106 vielmehr das erste Sicherheitselement 110 mit seinen kryptographischen Mitteln zur Verfügung.

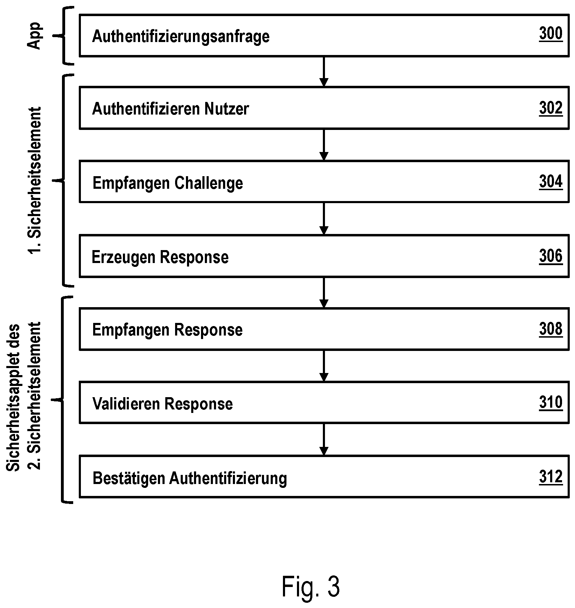

Figur 3 zeigt ein exemplarisches Verfahren zum Authentifizieren eines Nutzers gegenüber einem auf einem mobilen Endgerät installierten Anwendungsprogramm. In Schritt 300 stellt das Anwendungsprogramm (App) eine Authentifizierungsanfrage zum Authentifizieren des Nutzers des mobilen Endgeräts an das Betriebssystem des mobilen Endgeräts. Das Betriebssystem veranlasst einen Authentifizierungssensor des mobilen Endgeräts zum Erfassen eines oder mehrere Authentifizierungsmerkmale des Nutzers. In Schritt 302 wird der Nutzer unter Verwendung des ersten Sicherheitselements anhand der erfassten Authentifizierungsmerkmale authentifiziert. Nach Ausführungsformen werden die erfassten Authentifizierungsmerkmale mit hinterlegten Referenzmerkmalen verglichen. Bei einer hinreichenden Übereinstimmung zwischen erfassten Authentifizierungsmerkmalen und hinterlegten Referenzmerkmalen ist die Authentifizierung erfolgreich. In Schritt 304 empfängt das erste Sicherheitselement eine Challenge eines Challenge-Response-Verfahrens zum Bestätigen einer erfolgreichen Nutzerauthentifizierung. Die Challenge umfasst beispielsweise ein Nonce. Nach Ausführungsformen kann die Challenge vor oder nach der Authentifizierung empfangen werden. Insbesondere kann die Authentifizierungsanfrage die Challenge umfassen. Die Challenge wird beispielsweise von dem Sicherheitsapplet des zweiten Sicherheitselements erzeugt und dem Anwendungsprogramm zum Ausführen des Challenge-Response-Verfahrens zur Verfügung gestellt. In Schritt 306 erzeugt das erste Sicherheitselement eine Response. Hierzu wird beispielsweise die Challenge mit einem symmetrischen kryptographischen Schlüssel des ersten Sicherheitselements verschlüsselt. Die Response wird von dem ersten Sicherheitselement, beispielsweise über das Anwendungsprogramm, an das Sicherheitsapplet des zweiten Sicherheitselements gesendet. In Schritt 308 empfängt das Sicherheitsapplet die Response und validiert diese in Schritt 310. Das Sicherheitsapplet verfügt über den gleichen kryptographischen Schlüssel, mit welchem das erste Sicherheitselement die Response erzeugt hat. Zum Validieren der Response entschlüsselt das Sicherheitsapplet beispielsweise die Response und vergleicht das Ergebnis mit der zuvor von ihm erzeugten Challenge. Falls das Ergebnis der Entschlüsselung und die zuvor erzeugte Challenge identisch sind, ist das Challenge-Response-Verfahren erfolgreich. In Schritt 312 bestätigt das Sicherheitsapplet die erfolgreiche Authentifizierung des Nutzers, beispielsweise gegenüber dem Anwendungsprogramm.

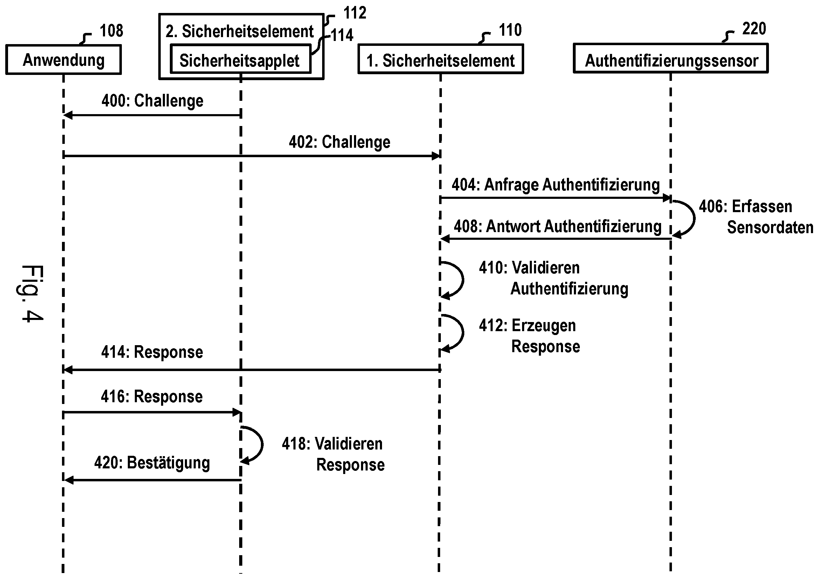

Figur 4 zeigt ein exemplarisches Verfahren zum Authentifizieren eines Nutzers gegenüber einem auf einem mobilen Endgerät installierten Anwendungsprogramm. In Schritt 400 sendet das Sicherheitsapplet 114 auf dem zweiten Sicherheitselement 112 eine Challenge, beispielsweise ein Nonce, an die Anwendung 108. In Schritt 402 sendet das Anwendungsprogramm 108 die Challenge in Reaktion auf deren Empfang an das erste Sicherheitselement 110. Das Sicherheitselement initiiert daraufhin eine Nutzerauthentifizierung. In Schritt 404 wird eine Authentifizierungsanfrage an den Authentifizierungssensor 220 gesendet. Beispielsweise wird zudem eine Authentifizierungsaufforderung für den Nutzer auf einer Anzeigevorrichtung des mobilen Endgeräts, z.B. einem Display, angezeigt. In Schritt 406 werden von dem Authentifizierungssensor 220 Authentifizierungssensordaten des Nutzers erfasst und als Antwort auf die Authentifizierungsanfrage dem ersten Sicherheitselement in Schritt 408 zur Verfügung gestellt. In Schritt 410 werden die Authentifizierungssensordaten unter Verwendung des ersten Sicherheitselements 110 validiert. Falls die Validierung und mithin die Authentifizierung erfolgreich ist, wird von dem ersten Sicherheitselement 110 in Schritt 412 eine Response auf die Challenge erzeugt. Hierzu wird beispielsweise das Nonce der Challenge mit einem symmetrischen Schlüssel, welcher nur dem ersten Sicherheitselement 110 und dem Sicherheitsapplet 114 bekannt ist, verschlüsselt. In Schritt 414 wird die Response an das Anwendungsprogramm 108 gesendet, welches die Response in Schritt 416 als Antwort auf die Challenge aus Schritt 400 an das Sicherheitsapplet 114 weitergeleitet. In Schritt 418 validiert das Sicherheitsapplet 114 die empfangene Response. Beispielsweise entschlüsselt das Sicherheitsapplet die Response mit dem symmetrischen Schlüssel und vergleicht das Ergebnis mit der in Schritt 400 gesendeten Challenge. Falls beide übereinstimmen ist die Validierung erfolgreich und eine gültige Nutzerauthentifizierung erfolgreich nachgewiesen. In Schritt 418 wird zur Bestätigung der erfolgreichen Authentifizierung beispielsweise eine Authentifizierungsbestätigung von dem Sicherheitsapplet 114 an das Anwendungsprogramm gesendet.

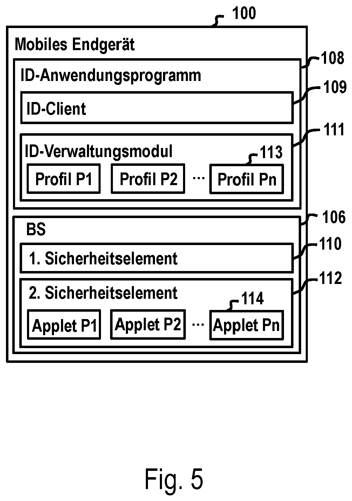

Figur 5 zeigt ein exemplarische mobiles Endgerät 100, auf welchem ein Anwendungsprogramm 108 gespeichert ist, bei dem es sich um ein ID-Anwendungsprogramm handelt. Das ID-Anwendungsprogramm verwaltet dem Nutzer zugeordnete Identitätsattribute. Hierzu umfasst es ein ID-Verwaltungsmodul 111 mit ein oder mehreren ID-Profilen 113. Jedem der ID-Profile 113 ist jeweils ein unabhängiges Sicherheitsapplet 114 in dem zweiten Sicherheitselement 112 zugeordnet. Jedem der ID-Profile 113 ist jeweils ein Satz von ein oder mehreren Identitätsattributen zugeordnet. Diese Identitätsattribute sind beispielsweise jeweils einem Speicherbereich des zweiten Sicherheitselements 112 gespeichert, welcher dem entsprechend Sicherheitsapplet 115 zugeordnet ist, und/oder verschlüsselt in einem Speicher des mobilen Endgeräts gespeichert, wobei die kryptographischen Schlüssel zum entschlüsseln jeweils in den entsprechenden Sicherheitsapplets 114 gespeichert sind. Das ID-Anwendungsprogramm 108 umfasst ferner einen ID-Clientmodul 109, über welches das ID-Anwendungsprogramm 108 beispielsweise Anfragen nach Identitätsattributen eines der ID-Profile 113 empfangen kann. In Antwort auf die Anfrage, beispielsweise durch einen ID-Provider-Service über ein Netzwerk, kann das ID-Anwendungsprogramm 108 die angefragten Identitätsattribute unter der Voraussetzung einer Zustimmung des Nutzers zur Verfügung stellen. Hierfür kann eine Nutzerauthentifizierung gegenüber dem ID-Anwendungsprogramm 108 notwendig sein bzw. kann ein Nachweis einer erfolgreichen Nutzerauthentifizierung durch das ID-Anwendungsprogramm 108 mittels eines Challenge-Response-Verfahrens notwendig sein. Hierzu wird ein dem Betriebssystem 106 zugeordnetes erstes Sicherheitselement 110 verwendet, von welchem eine erfolgreiche Nutzerauthentifizierung mit einem Authentifizierungssensor des mobilen Endgeräts 100 bestätigt wird.

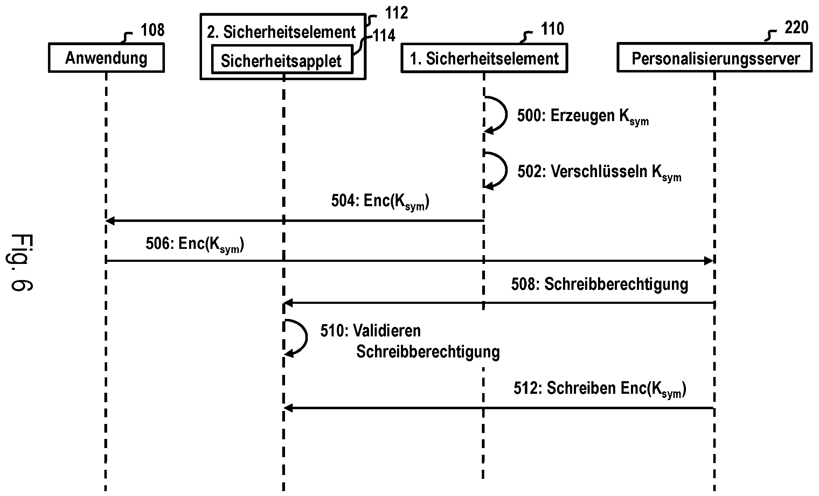

Figur 6 zeigt ein Verfahren zum Bereitstellen des symmetrischen Schlüssels in dem ersten Sicherheitselement 110 und dem Sicherheitsapplet 114 für das Challenge-Response-Verfahren. In Schritt 500 erzeugt das ersten Sicherheitselement 110 einen symmetrischen Schlüssel K_{sym} für das Challenge-Response-Verfahren und verschlüsselt diesen in Schritt 502 mit einem öffentlichen kryptographischen Schlüssel eines asymmetrischen Schlüsselpaars des Sicherheitsapplets 114. Den resultierenden verschlüsselten symmetrischen Schlüssel Enc(K_{sym}) sendet das ersten Sicherheitselement 110 in Schritt 504 an das Anwendungsprogramm 108, welches in Schritt 506 Enc(K_{sym}) an einen Personalisierungsserver 220 mit einer Schreibberechtigung zum Schreiben in einen dem Sicherheitsapplet zugeordneten Speicherbereich des zweiten Sicherheitselements weiterleitet. In Schritt 508 weist der Personalisierungsserver 220 seine Schreibberechtigung vor, beispielsweise unter Verwendung eines Berechtigungszertifikat und/oder eines hierfür vorgesehenen kryptographischen Schlüssels. In Schritt 510 wird die Schreibberechtigung validiert. Auf ein erfolgreiches Validieren der Schreibberechtigung, wird dem Personalisierungsserver 220 ein Schreibzugriff auf den Speicherbereich des zweiten Sicherheitselement gewähret, in welchen der Personalisierungsserver 220 in Schritt 512 Enc(K_{sym}) schreibt.

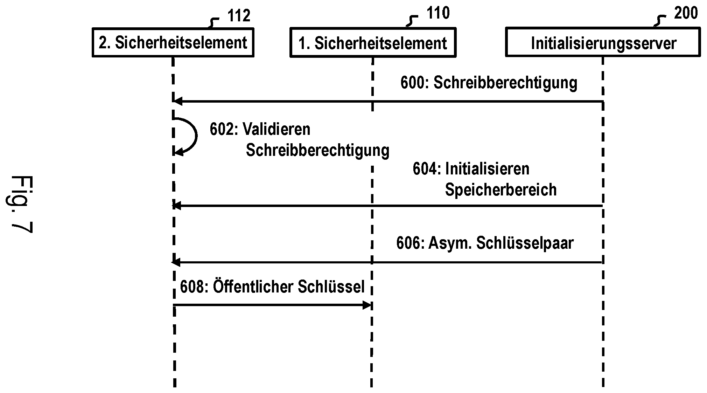

Figur 7 zeigt ein Verfahren zum eines Initialisieren Sicherheitsapplets in einem (zweiten) Sicherheitselement 112 unter Verwendung eines Initialisierungsserver 200. In Schritt 600 stellt der Initialisierungsserver 200 eine Schreibberechtigung zum Initialisieren des Sicherheitsapplets in dem zweiten Sicherheitselement bereit, welche in Schritt 602 validiert wird. Die Schreibberechtigung kann beispielsweise durch ein entsprechendes Berechtigungszertifikat und/oder eine Verwendung eines hierfür vorgesehenen kryptographischen Schlüssels nachgewiesen werden. Das Bereitstellen der Schreibberechtigung erfolgt beispielsweise über eine kryptographisch gesicherte Kommunikationsverbindung zwischen dem zweiten Sicherheitselement 112 und dem Initialisierungsserver 200 oder im Zuge eines Aufbaus der entsprechenden kryptographisch gesicherte Kommunikationsverbindung bzw. eines kryptographisch gesicherten Kommunikationskanals. Bei der kryptographisch gesicherte Kommunikationsverbindung kann es sich beispielsweise um eine Ende-zu-Ende-verschlüsselte Kommunikationsverbindung handeln. Auf eine erfolgreiche Validierung hin, wird dem Initialisierungsserver 200 ein Schreibzugriff über die Kommunikationsschnittstelle auf das zweite Sicherheitselement gewährt. In Schritt 604 initialisiert der Initialisierungsserver 200 den dem Sicherheitsapplet zugeordneten Speicherbereich des zweiten Sicherheitselements und schreibt in Schritt 606 ein asymmetrisches Schlüsselpaars in den initialisierten Speicherbereich. Das Initialisieren des Speicherbereich umfasst beispielsweise ein Schreiben eines Dateisystems in den entsprechenden Speicherbereich. In Schritt 608 stellt beispielsweise das Sicherheitsapplet 112 dem ersten Sicherheitselement 110, beispielsweise über das Anwendungsprogramm, den öffentlichen kryptographischen Schlüssel des asymmetrischen Schlüsselpaars zur Verfügung.

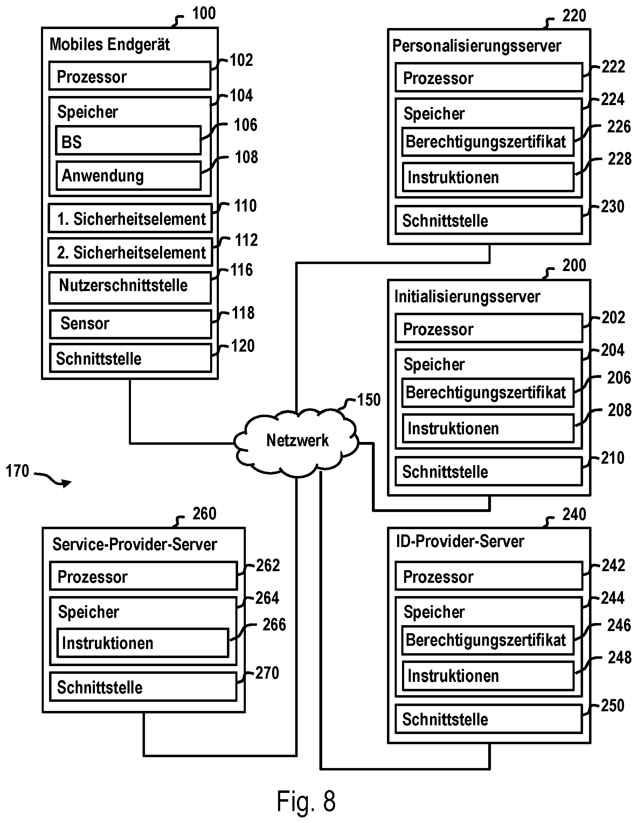

Figur 8 zeigt ein System 170, welches ein mobiles Endgerät 100 umfasst, das über ein Netzwerk 150, beispielsweise das Internet, mit einem Initialisierungsserver 220, einem Personalisierungsserver 220, einem ID-Provider-Server 240 und/oder einem Service-Provider-Server verbunden ist. Der Initialisierungsserver 200 umfasst einen Prozessor 202, einen Speicher 204 und eine Kommunikationsschnittstelle 210. In dem Speicher 204 sind Programminstruktionen 208 gespeichert, bei deren Ausführung der Prozessor 202 den Initialisierungsserver 200 zum Initialisieren eines Sicherheitsapplets in dem zweiten Sicherheitselement 112 des mobile Endgeräts 100 steuert, beispielsweise gemäß dem Verfahren in Figur 7. Zum Nachweis einer Schreibberechtigung zum Initialisieren des Sicherheitsapplets verwendet der Initialisierungsserver 200 beispielsweise das Berechtigungszertifikat 206.

Der Personalisierungsserver 220 umfasst einen Prozessor 222, einen Speicher 224 und eine Kommunikationsschnittstelle 230. In dem Speicher 204 sind Programminstruktionen 228 gespeichert, bei deren Ausführung der Prozessor 222 den Personalisierungsserver 220 zum Bereitstellen eines symmetrischen Schlüssels für das Challenge-Response-Verfahren des mobile Endgerät 100 steuert, beispielsweise gemäß dem Verfahren in Figur 6. Zum Nachweis einer Schreibberechtigung zum Schreiben des symmetrischen Schlüssels in einen dem Sicherheitsapplet zugeordneten Speicherbereich des zweiten Sicherheitselements 112 des mobile Endgeräts 100 verwendet der Personalisierungsserver 220 beispielsweise das Berechtigungszertifikat 226.

Der Service-Provider-Server 260 umfasst einen Prozessor 262, einen Speicher 264 und eine Kommunikationsschnittstelle 270. In dem Speicher 264 sind Programminstruktionen 268 gespeichert, bei deren Ausführung der Prozessor 262 den Service-Provider-Server 260 zum Bereitstellen von Dienstleistungen steuert, welche beispielsweise von dem mobilen Endgerät 100 über das Netzwerk 170 angefragt und/oder genutzt werden können. Eine Inanspruchnahme von Dienstleistungen des Service-Provider-Server 260 setzt beispielsweise ein Bereitstellen und/oder Nachweis eines oder mehrerer Identitätsattribute des Nutzers voraus. Auf eine Anfrage einer Dienstleistung des Service-Provider-Servers 260 durch das mobile Endgerät 100 sendet das Service-Provider-Servers 260 eine Identitätsattributsanfrage nach Identitätsattributen des Nutzers des mobilen Endgeräts 100 an einen ID-Provider-Server 240. Die Identitätsattributsanfrage kann von dem Service-Provider-Servers 260 beispielsweise direkt oder über das mobile Endgerät 100 an den ID-Provider-Server 240 gesendet werden.

Der ID-Provider-Server 240 umfasst einen Prozessor 242, einen Speicher 244 und eine Kommunikationsschnittstelle 250. In dem Speicher 244 sind Programminstruktionen 248 gespeichert, bei deren Ausführung der Prozessor 242 den Service-Provider-Server 240 zum Auslesen der in der Identitätsattributsanfrage spezifizierten Identitätsattribute aus einem Speicher des mobilen Endgeräts 100. Hierzu baut der ID-Provider-Server 240 einen kryptographisch gesicherten Kommunikationskanal mit dem mobilen Endgerät 100 auf. Bei dem einen kryptographisch gesicherten Kommunikationskanal kann es sich beispielsweise um einen Ende-zu-Ende-verschlüsselten Kommunikationskanal handeln. Beispielsweise setzt dies eine gegenseitiges Authentifizieren von ID-Provider-Server 240 und mobilem Endgerät 100 voraus. Für einen Lesezugriff auf die Identitätsattribute verwendet der ID-Provider-Server 240 ein ID-Anwendungsprogramm 108 auf dem mobilen Endgerät 100, welches die Identitätsattribute verwaltet. Eine Leseberechtigung zum Auslesen der in der Identitätsattributsanfrage spezifizierten Identitätsattribute weist der ID-Provider-Server 240 beispielsweise mit dem Berechtigungszertifikat 248 nach. Ferner setzt ein Lesezugriff des ID-Provider-Server 240 auf die in der Identitätsattributsanfrage spezifizierten Identitätsattribute eine Zustimmung des Nutzers des mobilen Endgeräts 100 voraus. Hierzu muss sich der Nutzer gegenüber dem ID-Anwendungsprogramm 108 erfolgreich authentisieren, beispielsweise unter Verwendung des Verfahrens der Figuren 3 und 4. Beispielsweise wird dem Nutzer über eine Anzeigevorrichtung der Nutzerschnittstelle 116 angezeigt, welche Identitätsattribut an den ID-Provider-Server 240 gesendet werden sollen, und dem Nutzer ermöglicht diese Auswahl zu bearbeiten. Beispielsweise kann der Nutzer selektieren, welche der angefragten Identitätsattribute tatsächlich gesendet werden. Auf einen erfolgreichen Nachweis der Leseberechtigung und eine erfolgreiche Nutzerauthentifizierung werden dem ID-Provider-Server 240 die freigegebenen Identitätsattribute zugesendet. Der ID-Provider-Server 240 signiert die empfangenen Identitätsattribute und sendet diese an den Service-Provider-Server 260.

### Bezugszeichenliste

- 100: mobiles Endgerät
- 102: Prozessor
- 104: Speicher
- 106: Betriebssystem
- 108: Anwendungsprogramm
- 109: ID-Client
- 110: erstes Sicherheitselement
- 111: ID-Verwaltungsmodul
- 112: zweites Sicherheitselement
- 113: ID-Profil
- 114: Sicherheitsapplet
- 116: Nutzerschnittstelle
- 118: Authentifizierungssensor
- 120: Kommunikationsschnittstelle
- 150: Netzwerk
- 170: System
- 200: Initialisierungsserver
- 202: Prozessor
- 204: Speicher
- 206: Berechtigungszertifikat
- 208: Programminstruktionen
- 210: Kommunikationsschnittstelle
- 220: Personalisierungsserver
- 222: Prozessor
- 224: Speicher
- 226: Berechtigungszertifikat
- 228: Programminstruktionen
- 230: Kommunikationsschnittstelle
- 240: ID-Provider-Server
- 242: Prozessor
- 244: Speicher
- 246: Berechtigungszertifikat
- 248: Programminstruktionen
- 250: Kommunikationsschnittstelle
- 260: Service-Provider-Server
- 262: Prozessor
- 264: Speicher
- 266: Programminstruktionen
- 270: Kommunikationsschnittstelle

## Patentansprüche

1. Verfahren zum Authentifizieren eines Nutzers gegenüber einem auf einem mobilen Endgerät (100) installierten Anwendungsprogramm (108), wobei auf dem Endgerät (100) ein Betriebssystem (106) installiert ist, wobei das Betriebssystem (106) dazu konfiguriert ist zumindest einen Authentifizierungssensor (118) des Endgeräts (100) zum Erfassen zumindest eines Authentifizierungsfaktors des Nutzers zu steuern, wobei das Endgerät (100) ein dem Betriebssystem (106) zugeordnetes erstes Sicherheitselement (110) umfasst, wobei das erste Sicherheitselement (110) kryptographische Mittel zum Ausführen eines Challenge-Response-Verfahrens umfasst,
wobei das Endgerät (100) ferner ein von dem ersten Sicherheitselement (110) unabhängiges zweites Sicherheitselement (112) mit einem dem Anwendungsprogramm (108) zugeordneten Sicherheitsapplet (114) umfasst, wobei das Sicherheitsapplet (114) kryptographische Mittel zum Ausführen eines Challenge-Response-Verfahrens umfasst,
wobei das Verfahren umfasst:
• auf eine Authentifizierungsanfrage des Anwendungsprogramms (108) hin, Authentifizieren des Nutzers durch das Betriebssystem (106) unter Verwendung des Authentifizierungssensors (118) und des ersten Sicherheitselements (110),
wobei das Authentifizieren des Nutzers umfasst:
• Erfassen zumindest eines Authentifizierungsfaktors des Nutzers unter Verwendung des Authentifizierungssensor (118),
• Validieren des erfassten Authentifizierungsfaktors unter Verwendung des ersten Sicherheitselements (110),
• Ausführen eines Challenge-Response-Verfahrens zwischen dem ersten Sicherheitselement (110) und dem Sicherheitsapplet (114) des zweiten Sicherheitselements (112), wobei ein erfolgreiches Ausführen des Challenge-Response-Verfahrens eine erfolgreiche Authentifizierung des Nutzers durch das Betriebssystem (106) bestätigt, wobei eine Kommunikation im Zuge des Challenge-Response-Verfahrens zwischen dem ersten Sicherheitselement (110) und dem Sicherheitsapplet (114) über das Anwendungsprogramm (108) erfolgt,
wobei das Challenge-Response-Verfahren umfasst:
• Senden der Challenge des Sicherheitsapplets (114) an das Anwendungsprogramm (108),
• Weiterleiten der Challenge von dem Anwendungsprogramm (108) an das erste Sicherheitselement (110), wobei die Authentifizierungsanfrage die Challenge umfasst,
• auf eine erfolgreiche Authentifizierung des Nutzers durch das Betriebssystem (106) hin, Erzeugen der Response durch das erste Sicherheitselement (110), wobei das Erzeugen der Response ein Verschlüsseln der Challenge umfasst,
• Senden der Response von dem ersten Sicherheitselement (110) an das Anwendungsprogramm (108),
• Weiterleiten der Response von dem Anwendungsprogramm (108) an das Sicherheitsapplet (114),
• Entschlüsseln der Response und Validieren der entschlüsselten Response durch das Sicherheitsapplet (114),
• auf ein erfolgreiches Ausführen des Challenge-Response-Verfahrens hin, Bestätigen der erfolgreichen Authentifizierung des Nutzers gegenüber dem Anwendungsprogramm (108) durch das Sicherheitsapplet (114), wobei das Bestätigen der erfolgreichen Authentifizierung des Nutzers ein Senden einer Authentifizierungsbestätigung des Sicherheitsapplets (114) an das Anwendungsprogramm (108) auf eine erfolgreiche Validierung der Response hin umfasst.

2. Verfahren nach Anspruch 1, wobei das Verschlüsseln und Entschlüsseln unter Verwendung eines symmetrischen kryptographischen Schlüssels erfolgt.

3. Verfahren nach Anspruch 2, wobei das Verfahren ferner ein Bereitstellen des symmetrischen Schlüssels umfasst.

4. Verfahren nach Anspruch 3, wobei das Bereitstellen des symmetrischen Schlüssels umfasst:
• Erzeugen des symmetrischen Schlüssels durch das erste Sicherheitselement (110),
• Verschlüsseln des erzeugten symmetrischen Schlüssels durch das erste Sicherheitselement (110) unter Verwendung eines ersten öffentlichen kryptographischen Schlüssels eines dem Sicherheitsapplet (114) des zweiten Sicherheitselements (112) zugeordneten ersten asymmetrischen kryptographischen Schlüsselpaars,
• Übertragen des verschlüsselten symmetrischen Schlüssels von dem ersten Sicherheitselement (110) an das Sicherheitsapplet (114) des zweiten Sicherheitselements (112),
• Entschlüsseln des verschlüsselten symmetrischen Schlüssels durch das Sicherheitsapplet (114) unter Verwendung eines ersten privaten Schlüssels des ersten asymmetrischen kryptographischen Schlüsselpaars.

5. Verfahren nach Anspruch 4, wobei das mobile Endgerät (100) eine Kommunikationsschnittstelle (120) zur Kommunikation über ein Netzwerk (150) umfasst, wobei das Übertragen des verschlüsselten symmetrischen Schlüssels umfasst:
• Senden des verschlüsselten symmetrischen Schlüssels von dem ersten Sicherheitselement (110) an das Anwendungsprogramm (108),
• Weiterleiten des verschlüsselten symmetrischen Schlüssels von dem Anwendungsprogramm (108) unter Verwendung der Kommunikationsschnittstelle (120) über das Netzwerk (150) an einen externer Personalisierungsserver (220), welcher über eine Schreibberechtigung zum Schreiben in einen dem Sicherheitsapplet (114) zugeordneten Speicherbereich des zweiten Sicherheitselements (112) verfügt,
• Validieren der Schreibberechtigung des Personalisierungsservers (220) zum Schreiben in den dem Sicherheitsapplet (114) zugeordneten Speicherbereich des zweiten Sicherheitselements (112),
• auf ein erfolgreiches Validieren der Schreibberechtigung des Personalisierungsservers (220), Gewähren eines Schreibzugriffs des externen Personalisierungsservers (220) über die Kommunikationsschnittstelle (120) auf den Speicherbereich des zweiten Sicherheitselements (112),
• Schreiben des verschlüsselten symmetrischen Schlüssels in den Speicherbereich des zweiten Sicherheitselements (112), welcher dem Sicherheitsapplet (114) zugeordnet ist, und/oder
wobei das Verfahren ferner ein Initialisieren des Sicherheitsapplets (114) in dem zweiten Sicherheitselement durch einen externen Initialisierungsserver (200) umfasst, wobei der Initialisierungsserver (200) eine Schreibberechtigung zum Initialisieren des Sicherheitsapplets (114) in dem zweiten Sicherheitselement (112) umfasst,
wobei das Initialisieren umfasst:
• Validieren der Schreibberechtigung des Initialisierungsservers (200) zum Initialisieren des Sicherheitsapplets (114) in dem zweiten Sicherheitselement (112),
• auf ein erfolgreiches Validieren der Schreibberechtigung des Initialisierungsservers (200), Gewähren eines Schreibzugriffs des externen Initialisierungsservers (200) über die Kommunikationsschnittstelle (120) auf das zweite Sicherheitselement (112),
• Initialisieren des dem Sicherheitsapplet (114) zugeordneten Speicherbereich des zweiten Sicherheitselements (112),
• Schreiben des ersten asymmetrischen Schlüsselpaars in den initialisierten Speicherbereich.

6. Verfahren nach Anspruch 3, wobei das Bereitstellen des symmetrischen Schlüssels umfasst:
• Erzeugen des symmetrischen Schlüssels durch das zweite Sicherheitselement (112),
• Verschlüsseln des erzeugten symmetrischen Schlüssels durch das zweite Sicherheitselement (112) unter Verwendung eines zweiten öffentlichen kryptographischen Schlüssels eines dem ersten Sicherheitselement (110) zugeordneten zweiten asymmetrischen kryptographischen Schlüsselpaars,
• Übertragen des verschlüsselten symmetrischen Schlüssels von dem zweiten Sicherheitselement (112) an das erste Sicherheitselement (110),
• Entschlüsseln des verschlüsselten symmetrischen Schlüssels durch das erste Sicherheitselement (110).

7. Verfahren nach einem der voranstehenden Ansprüche, wobei es sich bei dem Anwendungsprogramm (108) um ein ID-Anwendungsprogramm handelt, welches dazu konfiguriert ist ein oder mehrere dem Nutzer zugeordnete Identitätsattribute zu verwalten.

8. Verfahren nach Anspruch 7, wobei das ID-Anwendungsprogramm konfiguriert ist, ein oder mehrere der Identitätsattribute des Nutzers an ein weiteres Endgerät (100) zu senden, und/oder
wobei das ID-Anwendungsprogramm konfiguriert ist, ein oder mehrere der Identitätsattribute des Nutzers unter Verwendung der Kommunikationsschnittstelle (120) über ein Netzwerk (150) an einen ID-Provider-Server (240) zum Bereitstellen für einen Service-Provider-Server (260) und/oder zur Bestätigung gegenüber dem Service-Provider-Server (260) zu senden, und/oder
wobei das ID-Anwendungsprogramm ein ID-Verwaltungsmodul (111) umfasst, welches eine Mehrzahl von ID-Profilen (113) verwaltet, wobei jedem der ID-Profile (113) jeweils ein unabhängiges Sicherheitsapplet (114) in dem zweiten Sicherheitselement (112) zugeordnet ist,
wobei jedem der ID-Profile (113) beispielsweise jeweils ein Satz von ein oder mehreren Identitätsattributen zugeordnet ist.

9. Mobiles Endgerät (100) zum Authentifizieren eines Nutzers gegenüber einem auf einem mobilen Endgerät (100) installierten Anwendungsprogramm (108), wobei das mobile Endgerät (100) einen Prozessor (102) umfasst, wobei auf dem Endgerät (100) ein Betriebssystem (106) installiert ist, wobei das Betriebssystem (106) dazu konfiguriert ist zumindest einen Authentifizierungssensor (118) des Endgeräts (100) zum Erfassen zumindest eines Authentifizierungsfaktors des Nutzers zu steuern, wobei das Endgerät (100) ein dem Betriebssystem (106) zugeordnetes erstes Sicherheitselement (110) umfasst, wobei das erste Sicherheitselement (110) kryptographische Mittel zum Ausführen eines Challenge-Response-Verfahrens umfasst,
wobei das Endgerät (100) ferner ein von dem ersten Sicherheitselement (110) unabhängiges zweites Sicherheitselement (112) mit einem dem Anwendungsprogramm (108) zugeordneten Sicherheitsapplet (114) umfasst, wobei das Sicherheitsapplet (114) kryptographische Mittel zum Ausführen eines Challenge-Response-Verfahrens umfasst,
wobei der Prozessor (102) dazu konfiguriert ist ein Verfahren zum Authentifizieren eines Nutzers gegenüber einem auf einem mobilen Endgerät (100) installierten Anwendungsprogramm (108) auszuführen, welches umfasst:
• auf eine Authentifizierungsanfrage des Anwendungsprogramms (108) hin, Authentifizieren des Nutzers durch das Betriebssystem (106) unter Verwendung des Authentifizierungssensors (118) und des ersten Sicherheitselements (110),
wobei das Authentifizieren des Nutzers umfasst:
• Erfassen zumindest eines Authentifizierungsfaktors des Nutzers unter Verwendung des Authentifizierungssensor (118),
• Validieren des erfassten Authentifizierungsfaktors unter Verwendung des ersten Sicherheitselements (110),
• Ausführen eines Challenge-Response-Verfahrens zwischen dem ersten Sicherheitselement (110) und dem Sicherheitsapplet (114) des zweiten Sicherheitselements (112), wobei ein erfolgreiches Ausführen des Challenge-Response-Verfahrens eine erfolgreiche Authentifizierung des Nutzers durch das Betriebssystem (106) bestätigt, wobei eine Kommunikation im Zuge des Challenge-Response-Verfahrens zwischen dem ersten Sicherheitselement (110) und dem Sicherheitsapplet (114) über das Anwendungsprogramm (108) erfolgt,
wobei das Challenge-Response-Verfahren umfasst:
• Senden der Challenge des Sicherheitsapplets (114) an das Anwendungsprogramm (108),
• Weiterleiten der Challenge von dem Anwendungsprogramm (108) an das erste Sicherheitselement (110), wobei die Authentifizierungsanfrage die Challenge umfasst,
• auf eine erfolgreiche Authentifizierung des Nutzers durch das Betriebssystem (106) hin, Erzeugen der Response durch das erste Sicherheitselement (110), wobei das Erzeugen der Response ein Verschlüsseln der Challenge umfasst,
• Senden der Response von dem ersten Sicherheitselement (110) an das Anwendungsprogramm (108),
• Weiterleiten der Response von dem Anwendungsprogramm (108) an das Sicherheitsapplet (114),
• Entschlüsseln der Response und Validieren der entschlüsselten Response durch das Sicherheitsapplet (114),
• auf ein erfolgreiches Ausführen des Challenge-Response-Verfahrens hin, Bestätigen der erfolgreichen Authentifizierung des Nutzers gegenüber dem Anwendungsprogramm (108) durch das Sicherheitsapplet (114), wobei das Bestätigen der erfolgreichen Authentifizierung des Nutzers ein Senden einer Authentifizierungsbestätigung des Sicherheitsapplets (114) an das Anwendungsprogramm (108) auf eine erfolgreiche Validierung der Response hin umfasst.

10. System (170), wobei das System ein mobiles Endgerät (100) nach Anspruch 9 mit einer Kommunikationsschnittstelle (120) zur Kommunikation über ein Netzwerk (150) und einen Initialisierungsserver (200) umfasst, wobei der Initialisierungsserver (200) zum Initialisieren des Sicherheitsapplets (114) in dem zweiten Sicherheitselement konfiguriert ist und eine Schreibberechtigung zum Initialisieren des Sicherheitsapplets (114) in dem zweiten Sicherheitselement (112) umfasst, wobei das Initialisieren umfasst:
• Validieren der Schreibberechtigung des Initialisierungsservers (200) zum Initialisieren des Sicherheitsapplets (114) in dem zweiten Sicherheitselement (112),
• auf ein erfolgreiches Validieren der Schreibberechtigung des Initialisierungsservers (200), Gewähren eines Schreibzugriffs des externen Initialisierungsservers (200) über die Kommunikationsschnittstelle (120) auf das zweite Sicherheitselement (112),
• Initialisieren des dem Sicherheitsapplet (114) zugeordneten Speicherbereich des zweiten Sicherheitselements (112),
• Schreiben des ersten asymmetrischen Schlüsselpaars in den initialisierten Speicherbereich.

11. System (170), wobei das System ein mobiles Endgerät (100) nach Anspruch 9 mit einer Kommunikationsschnittstelle (120) zur Kommunikation über ein Netzwerk (150) und einen Personalisierungsserver (220) umfasst, wobei der Personalisierungsserver (220) zum Personalisieren des Sicherheitsapplets (114) konfiguriert ist und eine Schreibberechtigung zum Schreiben in einen dem Sicherheitsapplet (114) zugeordneten Speicherbereich des zweiten Sicherheitselements (112) umfasst, wobei das Personalisieren umfasst:
• Erzeugen eines symmetrischen Schlüssels durch das erste Sicherheitselement (110),
• Verschlüsseln des erzeugten symmetrischen Schlüssels durch das erste Sicherheitselement (110) unter Verwendung eines ersten öffentlichen kryptographischen Schlüssels eines dem Sicherheitsapplet (114) des zweiten Sicherheitselements (112) zugeordneten ersten asymmetrischen kryptographischen Schlüsselpaars,
• Senden eines verschlüsselten symmetrischen Schlüssels von dem ersten Sicherheitselement (110) an das Anwendungsprogramm (108),
• Weiterleiten des verschlüsselten symmetrischen Schlüssels von dem Anwendungsprogramm (108) unter Verwendung der Kommunikationsschnittstelle (120) über das Netzwerk (150) an den Personalisierungsserver (220),
• Validieren der Schreibberechtigung des Personalisierungsservers (220) zum Schreiben in den dem Sicherheitsapplet (114) zugeordneten Speicherbereich des zweiten Sicherheitselements (112),
• auf ein erfolgreiches Validieren der Schreibberechtigung des Personalisierungsservers (220), gewähren eines Schreibzugriffs des externen Personalisierungsservers (220) über die Kommunikationsschnittstelle (120) auf den Speicherbereich des zweiten Sicherheitselements (112),
• Schreiben des verschlüsselten symmetrischen Schlüssels in den Speicherbereich des zweiten Sicherheitselements (112), welcher dem Sicherheitsapplet (114) zugeordnet ist.

12. System (170), wobei das System ein mobiles Endgerät (100) nach Anspruch 9 mit einer Kommunikationsschnittstelle (120) zur Kommunikation über ein Netzwerk (150) und einen ID-Provider-Server (240) umfasst, wobei es sich bei dem Anwendungsprogramm (108) um ein ID-Anwendungsprogramm handelt, welches dazu konfiguriert ist ein oder mehrere in dem mobilen Endgerät (100) gespeicherte und dem Nutzer zugeordnete Identitätsattribute zu verwalten, wobei der ID-Provider-Server (240) zum Bereitstellen und/oder Bestätigen von ein oder mehreren der Identitätsattribute des Nutzers für einen Service-Provider-Server (260) konfiguriert ist und eine Leseberechtigung zum Lesen ein oder mehrere der Identitätsattribute des Nutzers umfasst. das Bereitstellen und/oder Bestätigen von ein oder mehreren der Identitätsattribute des Nutzers für einen Service-Provider-Server (260) umfasst:
• Validieren der Leseberechtigung des ID-Provider-Server (240) zum Lesen ein oder mehrere der Identitätsattribute des Nutzers,
• auf ein erfolgreiches Validieren der Leseberechtigung, Senden ein oder mehrere der Identitätsattribute des Nutzers an den ID-Provider-Server (240),
• Signieren der gesendeten ein oder mehrere der Identitätsattribute des Nutzers durch den ID-Provider-Server (240),
• Senden der signierten ein oder mehrere der Identitätsattribute des Nutzers an den Service-Provider-Server (260).

## Claims

1. A method for authenticating a user to an application program (108) installed on a mobile terminal device (100), wherein an operating system (106) is installed on the terminal device (100), wherein the operating system (106) is configured to control at least one authentication sensor (118) of the terminal device (100) to detect at least one authentication factor of the user, wherein the terminal device (100) comprises a first security element (110) assigned to the operating system (106), wherein the first security element (110) comprises cryptographic means for carrying out a challenge-response method,
wherein the terminal device (100) further comprises a second security element (112) that is independent of the first security element (110) and comprises a security applet (114) assigned to the application program (108), wherein the security applet (114) comprises cryptographic means for carrying out a challenge-response method,
wherein the method comprises:
• upon an authentication request by the application program (108), authenticating the user by means of the operating system (106) using the authentication sensor (118) and the first security element (110), wherein the authentication of the user comprises:
• detecting at least one authentication factor of the user using the authentication sensor (118),
• validating the detected authentication factor using the first security element (110),
• carrying out a challenge-response method between the first security element (110) and the security applet (114) of the second security element (112), wherein the challenge-response method being successfully carried out confirms successful authentication of the user by the operating system (106), wherein communication during the challenge-response method between the first security element (110) and the security applet (114) takes place via the application program (108),
wherein the challenge-response method comprises:
• sending the challenge of the security applet (114) to the application program (108),
• forwarding the challenge from the application program (108) to the first security element (110), wherein the authentication request comprises the challenge,
• upon successful authentication of the user by the operating system (106), generating the response by means of the first security element (110), wherein generating the response comprises encrypting the challenge,
• sending the response from the first security element (110) to the application program (108),
• forwarding the response from the application program (108) to the security applet (114),
• decrypting the response and validating the encrypted response by means of the security applet (114),
• upon successfully carrying out the challenge-response method, confirming the successful authentication of the user to the application program (108) by means of the security applet (114), wherein confirming the successful authentication of the user comprises sending an authentication confirmation of the security applet (114) to the application program (108) upon successful validation of the response.

2. The method according to claim 1, wherein the encrypting and decrypting takes place using a symmetric cryptographic key.

3. The method according to claim 2, wherein the method further comprises providing the symmetric key.

4. The method according to claim 3, wherein providing the symmetric key comprises:
• generating the symmetric key by means of the first security element (110),
• encrypting the generated symmetric key by means of the first security element (110) using a first public cryptographic key of a first asymmetric cryptographic key pair assigned to the security applet (114) of the second security element (112),
• transmitting the encrypted symmetric key from the first security element (110) to the security applet (114) of the second security element (112),
• decrypting the encrypted symmetric key by means of the security applet (114) using a first private key of the first asymmetric cryptographic key pair.

5. The method according to claim 4, wherein the mobile terminal device (100) comprises a communication interface (120) for communicating over a network (150), wherein transmitting the encrypted symmetric key comprises:
• sending the encrypted symmetric key from the first security element (110) to the application program (108),
• forwarding the encrypted symmetric key from the application program (108), using the communication interface (120), over the network (150) to an external personalization server (220), which has a write permission to write to a memory region of the second security element (112) assigned to the security applet (114),
• validating the write permission of the personalization server (220) to write to the memory region of the second security element (112) assigned to the security applet (114),
• upon successfully validating the write permission of the personalization server (220), giving the external personalization server (220) write access to the memory region of the second security element (112) via the communication interface (120),
• writing the encrypted symmetric key to the memory region of the second security element (112), which is assigned to the security applet (114), and/or
wherein the method further comprises initializing the security applet (114) in the second security element by means of an external initialization server (200), wherein the initialization server (200) has a write permission for initializing the security applet (114) in the second security element (112),
wherein the initialization comprises:
• validating the write permission of the initialization server (200) to initialize the security applet (114) in the second security element (112),
• upon successfully validating the write permission of the initialization server (200), giving the external initialization server (200) write access to the second security element (112) via the communication interface (120),
• initializing the memory region of the second security element (112) assigned to the security applet (114),
• writing the first asymmetric key pair to the initialized memory region.

6. The method according to claim 3, wherein providing the symmetric key comprises:
• generating the symmetric key by means of the second security element (112),
• encrypting the generated symmetric key by means of the second security element (112) using a second public cryptographic key of a second asymmetric cryptographic key pair assigned to the first security element (110),
• transmitting the encrypted symmetric key from the second security element (112) to the first security element (110),
• decrypting the encrypted symmetric key by means of the first security element (110).

7. The method according to any one of the preceding claims, wherein the application program (108) is an ID application program which is configured to manage one or more identity attributes assigned to the user.

8. The method according to claim 7, wherein the ID application program is configured to send one or more of the identity attributes of the user to a further terminal device (100), and/or
wherein the ID application program is configured to send one or more of the identity attributes of the user to an ID provider server (240) over a network (150) using the communication interface (120) in order to provide them for a service provider server (260) and/or to confirm them to the service provider server (260), and/or
wherein the ID application program comprises an ID management module (111), which manages a plurality of ID profiles (113), wherein an independent security applet (114) is assigned to each of the ID profiles (113) in the second security element (112),
wherein a set of one or more identity attributes is assigned to each of the ID profiles (113), for example.

9. A mobile terminal device (100) for authenticating a user to an application program (108) installed on a mobile terminal device (100), wherein the mobile terminal device (100) comprises a processor (102), wherein an operating system (106) is installed on the terminal device (100), wherein the operating system (106) is configured to control at least one authentication sensor (118) of the terminal device (100) to detect at least one authentication factor of the user, wherein the terminal device (100) comprises a first security element (110) assigned to the operating system (106), wherein the first security element (110) comprises cryptographic means for carrying out a challenge-response method,
wherein the terminal device (100) further comprises a second security element (112) that is independent of the first security element (110) and comprises a security applet (114) assigned to the application program (108), wherein the security applet (114) comprises cryptographic means for carrying out a challenge-response method,
wherein the processor (102) is configured to carry out a method for authenticating a user to an application program (108) installed on a mobile terminal device (100), which comprises:
• upon an authentication request by the application program (108), authenticating the user by means of the operating system (106) using the authentication sensor (118) and the first security element (110), wherein the authentication of the user comprises:
• detecting at least one authentication factor of the user using the authentication sensor (118),
• validating the detected authentication factor using the first security element (110),
• carrying out a challenge-response method between the first security element (110) and the security applet (114) of the second security element (112), wherein the challenge-response method being successfully carried out confirms successful authentication of the user by the operating system (106), wherein communication during the challenge-response method between the first security element (110) and the security applet (114) takes place via the application program (108), wherein the challenge-response method comprises:
• sending the challenge of the security applet (114) to the application program (108),
• forwarding the challenge from the application program (108) to the first security element (110), wherein the authentication request comprises the challenge,
• upon successful authentication of the user by the operating system (106), generating the response by means of the first security element (110), wherein generating the response comprises encrypting the challenge,
• sending the response from the first security element (110) to the application program (108),
• forwarding the response from the application program (108) to the security applet (114),
• decrypting the response and validating the encrypted response by means of the security applet (114),
• upon successfully carrying out the challenge-response method, confirming the successful authentication of the user to the application program (108) by means of the security applet (114), wherein confirming the successful authentication of the user comprises sending an authentication confirmation of the security applet (114) to the application program (108) upon successful validation of the response.

10. A system (170), wherein the system comprises a mobile terminal device (100) according to claim 9 comprising a communication interface (120) for communicating over a network (150) and an initialization server (200), wherein the initialization server (200) is configured to initialize the security applet (114) in the second security element and has a write permission for initializing the security applet (114) in the second security element (112), wherein the initialization comprises:
• validating the write permission of the initialization server (200) to initialize the security applet (114) in the second security element (112),
• upon successfully validating the write permission of the initialization server (200), giving the external initialization server (200) write access to the second security element (112) via the communication interface (120),
• initializing the memory region of the second security element (112) assigned to the security applet (114),
• writing the first asymmetric key pair to the initialized memory region.

11. A system (170), wherein the system comprises a mobile terminal device (100) according to claim 9 comprising a communication interface (120) for communicating over a network (150) and a personalization server (220), wherein the personalization server (220) is configured to personalize the security applet (114) and has a write permission for writing to a memory region of the second security element (112) assigned to the security applet (114), wherein the personalization comprises:
• generating a symmetric key by means of the first security element (110),
• encrypting the generated symmetric key by means of the first security element (110) using a first public cryptographic key of a first asymmetric cryptographic key pair assigned to the security applet (114) of the second security element (112),
• sending the encrypted symmetric key from the first security element (110) to the application program (108),
• forwarding the encrypted symmetric key from the application program (108), using the communication interface (120), over the network (150) to the personalization server (220),
• validating the write permission of the personalization server (220) to write to the memory region of the second security element (112) assigned to the security applet (114),
• upon successfully validating the write permission of the personalization server (220), giving the external personalization server (220) write access to the memory region of the second security element (112) via the communication interface (120),
• writing the encrypted symmetric key to the memory region of the second security element (112), which is assigned to the security applet (114).

12. A system (170), wherein the system comprises a mobile terminal device (100) according to claim 9 comprising a communication interface (120) for communicating over a network (150) and an ID provider server (240), wherein the application program (108) is an ID application program which is configured to manage one or more identity attributes stored in the mobile terminal device (100) and assigned to the user, wherein the ID provider server (240) is configured to provide and/or confirm one or more of the identity attributes of the user for a service provider server (260) and has a read permission for reading one or more of the identity attributes of the user, the provision and/or confirmation of one or more of the identity attributes of the user for a service provider server (260) comprises:
• validating the read permission of the ID provider server (240) to read one or more of the identity attributes of the user,
• upon successfully validating the read permission, sending one or more of the identity attributes of the user to the ID provider server (240),
• signing the sent one or more of the identity attributes of the user by means of the ID provider server (240),
• sending the signed one or more of the identity attributes of the user to the service provider server (260).

## Revendications

1. Procédé d'authentification d'un utilisateur vis-à-vis d'un programme d'application (108) installé sur un dispositif de terminal mobile (100), dans lequel un système d'exploitation (106) est installé sur le dispositif de terminal (100), dans lequel le système d'exploitation (106) est configuré pour commander au moins un capteur d'authentification (118) du dispositif de terminal (100) afin de détecter au moins un facteur d'authentification de l'utilisateur, dans lequel le dispositif de terminal (100) comprend un premier élément de sécurité (110) attribué au système d'exploitation (106), dans lequel le premier élément de sécurité (110) comprend des moyens cryptographiques pour mettre en œuvre une méthode de challenge-réponse,
dans lequel le dispositif de terminal (100) comprend en outre un second élément de sécurité (112) qui est indépendant du premier élément de sécurité (110) et comprend un applet de sécurité (114) attribué au programme d'application (108), dans lequel l'applet de sécurité (114) comprend des moyens cryptographiques de mettre en œuvre une méthode de challenge-réponse,
dans lequel le procédé comprend les étapes consistant à :
• en cas de requête d'authentification par le programme d'application (108), authentifier l'utilisateur par le système d'exploitation (106) en utilisant le capteur d'authentification (118) et le premier élément de sécurité (110), dans lequel l'authentification de l'utilisateur comprend les étapes consistant à :
• détecter au moins un facteur d'authentification de l'utilisateur en utilisant le capteur d'authentification (118),
• valider le facteur d'authentification détecté en utilisant le premier élément de sécurité (110),
• mettre en œuvre une méthode de challenge-réponse entre le premier élément de sécurité (110) et l'applet de sécurité (114) du second élément de sécurité (112), dans lequel la réussite de la mise en œuvre de la méthode de challenge-réponse confirme l'authentification réussie de l'utilisateur par le système d'exploitation (106), dans lequel la communication pendant la méthode de challenge-réponse entre le premier élément de sécurité (110) et l'applet de sécurité (114) se déroule par l'intermédiaire du programme d'application (108),
dans lequel la méthode de challenge-réponse comprend les étapes consistant à :
• envoyer le challenge de l'applet de sécurité (114) au programme d'application (108),
• transférer le challenge depuis le programme d'application (108) au premier élément de sécurité (110), dans lequel la requête d'authentification comprend le challenge,
• en cas d'authentification réussie de l'utilisateur par le système d'exploitation (106), générer la réponse au moyen du premier élément de sécurité (110), dans lequel l'étape consistant à générer la réponse comprend une étape consistant à chiffrer le challenge,
• envoyer la réponse du premier élément de sécurité (110) au programme d'application (108),
• transférer la réponse du programme d'application (108) à l'applet de sécurité (114),
• déchiffrer la réponse et valider la réponse chiffrée au moyen de l'applet de sécurité (114),
• en cas de mise en œuvre réussie de la méthode de challenge-réponse, confirmer l'authentification réussie de l'utilisateur vis-à-vis du programme d'application (108) au moyen de l'applet de sécurité (114), dans lequel l'étape consistant à confirmer l'authentification réussie de l'utilisateur comprend l'envoi d'une confirmation d'authentification de l'applet de sécurité (114) au programme d'application (108) en cas de validation réussie de la réponse.

2. Procédé selon la revendication 1, dans lequel les étapes consistant à chiffrer et déchiffrer se déroulent en utilisant une clé cryptographique symétrique.

3. Procédé selon la revendication 2, dans lequel le procédé comprend en outre une étape consistant à fournir la clé symétrique.

4. Procédé selon la revendication 3, dans lequel l'étape consistant à fournir la clé symétrique comprend les étapes consistant à :
• générer la clé symétrique au moyen du premier élément de sécurité (110),
• chiffrer la clé symétrique générée au moyen du premier élément de sécurité (110) en utilisant une première clé cryptographique publique d'une première paire de clés cryptographiques asymétriques attribuée à l'applet de sécurité (114) du second élément de sécurité (112),
• transmettre la clé symétrique chiffrée du premier élément de sécurité (110) à l'applet de sécurité (114) du second élément de sécurité (112),
• déchiffrer la clé symétrique chiffrée au moyen de l'applet de sécurité (114) en utilisant une première clé privée de la première paire de clés cryptographiques asymétriques.

5. Procédé selon la revendication 4, dans lequel le dispositif de terminal mobile (100) comprend une interface de communication (120) pour communiquer sur un réseau (150), dans lequel l'étape consistant à transmettre la clé symétrique chiffrée comprend les étapes consistant à :
• envoyer la clé symétrique chiffrée du premier élément de sécurité (110) au programme d'application (108),
• transférer la clé symétrique chiffrée depuis le programme d'application (108), en utilisant l'interface de communication (120), sur le réseau (150) à un serveur de personnalisation externe (220), qui a une permission en écriture pour écrire dans une région de mémoire du second élément de sécurité (112) attribuée à l'applet de sécurité (114),
• valider la permission en écriture du serveur de personnalisation (220) pour écrire dans la région de mémoire du second élément de sécurité (112) attribuée à l'applet de sécurité (114),
• en cas de validation réussie de la permission en écriture du serveur de personnalisation (220), donner au serveur de personnalisation externe (220) un accès en écriture à la région de mémoire du second élément de sécurité (112) par l'intermédiaire de l'interface de communication (120),
• écrire la clé symétrique chiffrée dans la région de mémoire du second élément de sécurité (112), qui est attribuée à l'applet de sécurité (114), et/ou
dans lequel le procédé comprend en outre une étape consistant à initialiser l'applet de sécurité (114) dans le second élément de sécurité au moyen d'un serveur d'initialisation externe (200), dans lequel le serveur d'initialisation (200) a une permission en écriture pour initialiser l'applet de sécurité (114) dans le second élément de sécurité (112),
dans lequel l'initialisation comprend les étapes consistant à :
• valider la permission en écriture du serveur d'initialisation (200) pour initialiser l'applet de sécurité (114) dans le second élément de sécurité (112),
• en cas de validation réussie de la permission en écriture du serveur d'initialisation (200), donner au serveur d'initialisation externe (200) un accès en écriture au second élément de sécurité (112) par l'intermédiaire de l'interface de communication (120),
• initialiser la région de mémoire du second élément de sécurité (112) attribuée à l'applet de sécurité (114),
• écrire la première paire de clés asymétriques dans la région de mémoire initialisée.

6. Procédé selon la revendication 3, dans lequel l'étape consistant à fournir la clé symétrique comprend les étapes consistant à :
• générer la clé symétrique au moyen du second élément de sécurité (112),
• chiffrer la clé symétrique générée au moyen du second élément de sécurité (112) en utilisant une seconde clé cryptographique publique d'une seconde paire de clés cryptographiques asymétriques attribuée au premier élément de sécurité (110),
• transmettre la clé symétrique chiffrée du second élément de sécurité (112) au premier élément de sécurité (110),
• déchiffrer la clé symétrique chiffrée au moyen du premier élément de sécurité (110).

7. Procédé selon l'une quelconque des revendications précédentes, dans lequel le programme d'application (108) est un programme d'application d'ID qui est configuré pour gérer un ou plusieurs attributs d'identité attribués à l'utilisateur.

8. Procédé selon la revendication 7, dans lequel le programme d'application d'ID est configuré pour envoyer un ou plusieurs des attributs d'identité de l'utilisateur à un dispositif de terminal (100) supplémentaire, et/ou
dans lequel le programme d'application d'ID est configuré pour envoyer un ou plusieurs des attributs d'identité de l'utilisateur à un serveur de fournisseur d'ID (240) sur un réseau (150) en utilisant l'interface de communication (120) afin de les fournir à un serveur de fournisseur de services (260) et/ou de les confirmer au serveur de fournisseur de services (260), et/ou
dans lequel le programme d'application d'ID comprend un module de gestion d'ID (111), qui gère une pluralité de profils d'ID (113), dans lequel un applet de sécurité (114) indépendant est attribué à chacun des profils d'ID (113) dans le second élément de sécurité (112),
dans lequel un ensemble d'un ou de plusieurs attributs d'identité est attribué à chacun des profils d'ID (113), par exemple.

9. Dispositif de terminal mobile (100) destiné à authentifier un utilisateur vis-à-vis d'un programme d'application (108) installé sur un dispositif de terminal mobile (100), dans lequel le dispositif de terminal mobile (100) comprend un processeur (102), dans lequel un système d'exploitation (106) est installé sur le dispositif de terminal (100), dans lequel le système d'exploitation (106) est configuré pour commander au moins un capteur d'authentification (118) du dispositif de terminal (100) afin de détecter au moins un facteur d'authentification de l'utilisateur, dans lequel le dispositif de terminal (100) comprend un premier élément de sécurité (110) attribué au système d'exploitation (106), dans lequel le premier élément de sécurité (110) comprend des moyens cryptographiques pour mettre en œuvre une méthode de challenge-réponse,
dans lequel le dispositif de terminal (100) comprend en outre un second élément de sécurité (112) qui est indépendant du premier élément de sécurité (110) et comprend un applet de sécurité (114) attribué au programme d'application (108), dans lequel l'applet de sécurité (114) comprend des moyens cryptographiques de mettre en œuvre une méthode de challenge-réponse,
dans lequel le processeur (102) est configuré pour mettre en œuvre un procédé d'authentification d'un utilisateur vis-à-vis d'un programme d'application (108) installé sur un dispositif de terminal mobile (100), lequel comprend les étapes consistant à :
• en cas de requête d'authentification par le programme d'application (108), authentifier l'utilisateur au moyen du système d'exploitation (106) en utilisant le capteur d'authentification (118) et le premier élément de sécurité (110), dans lequel l'authentification de l'utilisateur comprend les étapes consistant à :
• détecter au moins un facteur d'authentification de l'utilisateur en utilisant le capteur d'authentification (118),
• valider le facteur d'authentification détecté en utilisant le premier élément de sécurité (110),
• mettre en œuvre une méthode de challenge-réponse entre le premier élément de sécurité (110) et l'applet de sécurité (114) du second élément de sécurité (112), dans lequel la réussite de la mise en œuvre de la méthode de challenge-réponse confirme l'authentification réussie de l'utilisateur par le système d'exploitation (106), dans lequel la communication pendant la méthode de challenge-réponse entre le premier élément de sécurité (110) et l'applet de sécurité (114) a lieu par l'intermédiaire du programme d'application (108), dans lequel la méthode de challenge-réponse comprend les étapes consistant à :
• envoyer le challenge de l'applet de sécurité (114) au programme d'application (108),
• transférer le challenge depuis le programme d'application (108) au premier élément de sécurité (110), dans lequel la requête d'authentification comprend le challenge,
• en cas d'authentification réussie de l'utilisateur par le système d'exploitation (106), générer la réponse au moyen du premier élément de sécurité (110), dans lequel l'étape consistant à générer la réponse comprend une étape consistant à chiffrer le challenge,
• envoyer la réponse du premier élément de sécurité (110) au programme d'application (108),
• transférer la réponse du programme d'application (108) à l'applet de sécurité (114),
• déchiffrer la réponse et valider la réponse chiffrée au moyen de l'applet de sécurité (114),
• en cas de mise en œuvre réussie de la méthode de challenge-réponse, confirmer l'authentification réussie de l'utilisateur vis-à-vis du programme d'application (108) au moyen de l'applet de sécurité (114), dans lequel l'étape consistant à confirmer l'authentification réussie de l'utilisateur comprend l'envoi d'une confirmation d'authentification de l'applet de sécurité (114) au programme d'application (108) en cas de validation réussie de la réponse.

10. Système (170), dans lequel le système comprend un dispositif de terminal mobile (100) selon la revendication 9 comprenant une interface de communication (120) pour communiquer sur un réseau (150) et un serveur d'initialisation (200), dans lequel le serveur d'initialisation (200) est configuré pour initialiser l'applet de sécurité (114) dans le second élément de sécurité et a une permission en écriture pour initialiser l'applet de sécurité (114) dans le second élément de sécurité (112), dans lequel l'initialisation comprend les étapes consistant à :
• valider la permission en écriture du serveur d'initialisation (200) pour initialiser l'applet de sécurité (114) dans le second élément de sécurité (112),
• en cas de validation réussie de la permission en écriture du serveur d'initialisation (200), donner au serveur d'initialisation externe (200) un accès en écriture au second élément de sécurité (112) par l'intermédiaire de l'interface de communication (120),
• initialiser la région de mémoire du second élément de sécurité (112) attribuée à l'applet de sécurité (114),
• écrire la première paire de clés asymétriques dans la région de mémoire initialisée.

11. Système (170), dans lequel le système comprend un dispositif de terminal mobile (100) selon la revendication 9 comprenant une interface de communication (120) pour communiquer sur un réseau (150) et un serveur de personnalisation (220), dans lequel le serveur de personnalisation (220) est configuré pour personnaliser l'applet de sécurité (114) et a une permission en écriture pour écrire dans une région de mémoire du second élément de sécurité (112) attribuée à l'applet de sécurité (114), dans lequel la personnalisation comprend les étapes consistant à :
• générer une clé symétrique au moyen du premier élément de sécurité (110),
• chiffrer la clé symétrique générée au moyen du premier élément de sécurité (110) en utilisant une première clé cryptographique publique d'une première paire de clés cryptographiques asymétriques attribuée à l'applet de sécurité (114) du second élément de sécurité (112),
• envoyer la clé symétrique chiffrée du premier élément de sécurité (110) au programme d'application (108),
• transférer la clé symétrique chiffrée du programme d'application (108), en utilisant l'interface de communication (120), sur le réseau (150) au serveur de personnalisation (220),
• valider la permission en écriture du serveur de personnalisation (220) pour écrire dans la région de mémoire du second élément de sécurité (112) attribuée à l'applet de sécurité (114),
• en cas de validation réussie de la permission en écriture du serveur de personnalisation (220), donner au serveur de personnalisation externe (220) un accès en écriture à la région de mémoire du second élément de sécurité (112) par l'intermédiaire de l'interface de communication (120),
• écrire la clé symétrique chiffrée dans la région de mémoire du second élément de sécurité (112), qui est attribuée à l'applet de sécurité (114).

12. Système (170), dans lequel le système comprend un dispositif de terminal mobile (100) selon la revendication 9 comprenant une interface de communication (120) pour communiquer sur un réseau (150) et un serveur de fournisseur d'ID (240), dans lequel le programme d'application (108) est un programme d'application d'ID qui est configuré pour gérer un ou plusieurs attributs d'identité stockés dans le dispositif de terminal mobile (100) et attribués à l'utilisateur, dans lequel le serveur de fournisseur d'ID (240) est configuré pour fournir et/ou confirmer un ou plusieurs des attributs d'identité de l'utilisateur pour un serveur de fournisseur de services (260) et a une permission en lecture pour lire un ou plusieurs des attributs d'identité de l'utilisateur, la fourniture et/ou la confirmation d'un ou de plusieurs des attributs d'identité de l'utilisateur pour un serveur de fournisseur de services (260) comprend les étapes consistant à :
• valider la permission en lecture du serveur de fournisseur d'ID (240) pour lire un ou plusieurs des attributs d'identité de l'utilisateur,
• en cas de validation réussie de la permission en lecture, envoyer un ou plusieurs des attributs d'identité de l'utilisateur au serveur de fournisseur d'ID (240),
• signer le ou les attributs d'identité de l'utilisateur envoyés au moyen du serveur de fournisseur d'ID (240),
• envoyer le ou les attributs d'identité de l'utilisateur signés au serveur de fournisseur de services (260).
